# EUROPEAN PATENT APPLICATION

(11) **EP 4 842 143 A1**
(43) Date of publication of application: **18.11.2026**
(21) Application number: 26155333.3
(22) Date of filing: 30.01.2026
(51) Int. Cl.: H05B 47/175

(54) **METHOD FOR CONSTRUCTING AND APPLYING DIGITAL LIGHTING COLOR LIBRARY**

(30) Priority: 15.05.2025 CN 202510628430
(71) Applicant: Brighten Technology Development CO., LTD, 10000 Guangzhou Guangdong (CN)
(72) Inventor: FENG, Chaojun, GUANGZHOU, 510000 (CN)
(74) Representative: Lapienis, Juozas

(57) **Abstract**

The present invention provides a method for constructing and applying a digital lighting color library. The method includes: determining a target color value corresponding to lighting application scenario requirements; determining a target color system adapted to lighting display characteristics; extracting a plurality of hues from the target color system based on the target color value; and generating the digital lighting color library based on preset color library generation requirements and the plurality of hues. By implementing this method, a color library specially adapted to light control can be innovatively constructed, so that operators have a relatively standard and accurate control reference in the field of lighting control, thereby ensuring the efficiency and effectiveness of lighting control.

## Description

### TECHNICAL FIELD

The present invention relates to the field of lighting control, and specifically, to a method for constructing a digital lighting color library, a method for coding a lighting color based on a digital lighting color library, a method for controlling lighting output, a method for applying the digital lighting color library, an apparatus for constructing the digital lighting color library, an electronic device, a readable storage medium, and a computer program product.

### BACKGROUND

In the field of lighting control, most current methods still rely on manual adjustments based on the experience of operators. In this approach, operators typically adjust lighting color parameters, such as RGB values or color temperature, manually according to their own experience and visual perception. For example, during stage lighting design, operators can roughly adjust the lighting colors to create different atmospheres, such as warm, mysterious, or cheerful, based on the atmosphere requirements of the performance scenario.

However, this method is highly dependent on the experience and subjective judgment of the operators, which can result in significant variations in the outcomes produced by different operators, making it difficult to achieve precise and consistent color control. In addition, for complex color requirements, manual adjustment tends to be challenging and inefficient, making it difficult to meet diverse lighting effect demands.

### SUMMARY

In view of the above problems, the present invention provides a method for constructing a digital lighting color library, a method for coding a lighting color based on a digital lighting color library, a method for controlling lighting output, a method for applying the digital lighting color library, an apparatus for constructing the digital lighting color library, an electronic device, a readable storage medium, and a computer program product, which can solve the difficulties in achieving precise and consistent lighting color control, and can also solve address the current challenges in meeting the requirements for diverse lighting effects.

According to a first aspect, the present invention provides a method for constructing a digital lighting color library, which includes:
determining a target color value corresponding to lighting application scenario requirements;
determining a target color system adapted to lighting display characteristics;
extracting a plurality of hues from the target color system based on the target color value; and
generating the digital lighting color library based on preset color library generation requirements and the plurality of hues.

In the foregoing technical solution, this method innovatively provides a digital lighting color library in the field of lighting control, so that the absence of a color library in the field of lighting control is filled, and the precision and standardization of lighting control are further improved.

According to a second aspect, the present invention provides a method for coding a lighting color based on a digital lighting color library, where the digital lighting color library is constructed by the method for constructing the digital lighting color library according to any one of the first aspect of the present invention. The method for coding lighting colors includes:
determining a lighting color to be coded;
identifying, based on the digital lighting color library, a principal hue to which the lighting color belongs;
determining a subdivided hue based on the lighting color and the principal hue;
determining a saturation level based on the lighting color and the subdivided hue; and
generating a color code based on the principal hue, the subdivided hue, and the saturation level.

In the foregoing technical solution, this method determines the principal hue, subdivided hue, and saturation level of the lighting color based on the digital lighting color library, and then generates a color code of the lighting color based on the principal hue, subdivided hue, and saturation level, thereby enabling a user to intuitively identify the lighting color when obtaining the lighting color. At the same time, this color coding also greatly facilitates users in finding and directly using colors.

According to a third aspect, the present invention provides a method for controlling lighting output, which includes:
acquiring a color code of a lighting color to be output, wherein the color code is obtained by coding according to the method for coding a lighting color based on a digital lighting color library according to any one of the second aspect of the present invention; and
controlling output of lighting corresponding to the color code based on a lighting control console.

In the foregoing technical solution, this method applies the color code after accordingly coding the lighting color, thereby achieving a more direct and effective lighting output control, and further providing higher accuracy of lighting output compared with conventional methods and avoiding a deviation between the color perceived by the human eye and the output lighting color.

According to a fourth aspect, the present invention provides a method for applying a digital lighting color library, where the digital lighting color library is constructed by the method for constructing the digital lighting color library according to any one of the first aspect of the present invention. The method for applying the digital lighting color library includes:
performing display optimization and UI settings on the digital lighting color library to obtain an optimized color library diagram; and
outputting the optimized color library diagram in a target software, so that operations of a user on the optimized color library diagram are reflected in the target software.

In the foregoing technical solution, this method enables the digital lighting color library to be applied in software, thereby allowing a user to select and apply colors using the digital lighting color library within the software.

According to a fifth aspect, the present invention provides an apparatus for constructing a digital lighting color library, which includes:
a color value determination unit, configured to determine a target color value corresponding to lighting application scenario requirements;
a color system determination unit, configured to determine a target color system adapted to lighting display characteristics;
a hue extraction unit, configured to extract a plurality of hues from the target color system based on the target color value; and
a color library generation unit, configured to generate the digital lighting color library based on preset color library generation requirements and the plurality of hues.

In the foregoing technical solution, the apparatus for generating the digital lighting color library is innovatively provided in the field of lighting control, so that the absence of an adapted color library in the field of lighting control is filled, and the precision and standardization of lighting control are further indirectly improved.

According to a sixth aspect, the present invention provides an apparatus for coding a lighting color based on a digital lighting color library, where the digital lighting color library is constructed by the apparatus for constructing the digital lighting color library according to any one of the fifth aspect of the present invention. The apparatus for coding a lighting color includes:
a lighting color determination unit, configured to determine a lighting color to be coded;
a principal hue identification unit, configured to identify, based on the digital lighting color library, a principal hue to which the lighting color belongs;
a subdivided hue identification unit, configured to determine a subdivided hue based on the lighting color and the principal hue;
a saturation level identification unit, configured to determine a saturation level based on the lighting color and the subdivided hue; and
a color coding unit, configured to generate a color code based on the principal hue, the subdivided hue, and the saturation level.

In the foregoing technical solution, this apparatus determines the principal hue, subdivided hue, and saturation level of the lighting color based on the digital lighting color library, and then generates a color code of the lighting color based on the principal hue, subdivided hue, and saturation level, thereby enabling a user to intuitively identify the lighting color when obtaining the lighting color. At the same time, this color coding also greatly facilitates users in finding and directly using colors.

According to a seventh aspect, the present invention provides an apparatus for controlling lighting output, which includes:
an acquisition unit, configured to acquire a color code of a lighting color to be output, wherein the color code is obtained by coding according to the method for coding a lighting color based on a digital lighting color library according to any one of the second aspect of the present invention; and
a control unit, configured to control output of lighting corresponding to the color code based on a lighting control console.

In the foregoing technical solution, this apparatus applies the color code after accordingly coding the lighting color, thereby achieving a more direct and effective lighting output control, and further providing higher accuracy of lighting output compared with conventional methods and avoiding a deviation between the color perceived by the human eye and the output lighting color.

According to an eighth aspect, the present invention provides an apparatus for applying a digital lighting color library, where the digital lighting color library is constructed by the apparatus for constructing the digital lighting color library according to any one of the fifth aspect of the present invention. The apparatus for applying the digital lighting color library includes:
an optimization unit, configured to perform display optimization and UI settings on the digital lighting color library to obtain an optimized color library diagram; and
an output unit, configured to output the optimized color library diagram in a target software, so that operations of a user on the optimized color library diagram are reflected in the target software.

In the foregoing technical solution, this apparatus enables the digital lighting color library to be applied in software, thereby allowing a user to select and apply colors using the digital lighting color library within the software.

According to a ninth aspect, the present invention provides an electronic device, where the electronic device includes a memory and a processor, the memory is configured to store a computer program, and the processor executes the computer program to cause the electronic device to perform the method according to any one of the first aspect to the fourth aspect of the present invention.

According to a tenth aspect, the present invention provides a readable storage medium, where the readable storage medium stores a computer program, and the computer program, when executed by a processor, performs the method according to any one of the first aspect to the fourth aspect of the present invention.

According to an eleventh aspect, the present invention provides a computer program product, where the computer program product includes a computer program, and the computer program, when executed by a processor, performs the method according to any one of the first aspect to the fourth aspect of the present invention.

The present invention has the following beneficial effects: in the field of lighting control, the method in the present invention innovatively provides a specialized and adapted color library and a corresponding method for constructing the color library. The method further facilitates lookup of specified colors and corresponding lighting control through color library coding. The method further contributes to improved standardization, automation, and accuracy of lighting output control, and aligns the lighting output more closely with human-eye identification effect. In addition, the method further provides a solution for using the color library in corresponding software, thereby enabling broader applicability and facilitating improved control of lighting output by an operator.

### BRIEF DESCRIPTION OF THE DRAWINGS

To more clearly illustrate the technical solutions of the embodiments of the present invention, the drawings required in the embodiments are briefly described below. The following drawings only illustrate certain embodiments of the present invention and therefore should not be considered as limiting the scope of the present invention. In all drawings, identical reference numerals are used to indicate identical elements.
FIG. 1 is a flowchart of a method for constructing a digital lighting color library according to some embodiments of the present invention;
FIG. 2 is a flowchart of a method for constructing a digital lighting color library according to some embodiments of the present invention;
FIG. 3 is a flowchart of method for coding a lighting color based on a digital lighting color library according to some embodiments of the present invention;
FIG. 4 is an exemplary diagram of a principal hue circle composed of 10 principal hues according to some embodiments of the present invention;
FIG. 5 is an exemplary diagram of a subdivided hue circle composed of 40 subdivided hues according to some embodiments of the present invention;
FIG. 6 is a schematic diagram of a saturation circle according to some embodiments of the present invention;
FIG. 7 is a schematic diagram of a digital lighting color library according to some embodiments of the present invention;
FIG. 8 is a schematic diagram of a chromaticity diagram according to some embodiments of the present invention;
FIG. 9 is a conceptual schematic diagram illustrating the division of a target color coordinate range based on target color coordinates of a target subdivided hue and a preset color tolerance in some embodiments of the present invention;
FIG. 10 is a diagram showing the effect of saturation grading points in a chromaticity diagram according to some embodiments of the present invention;
FIG. 11 is a comparative schematic diagram of a relationship between a width/narrowness of a color gamut range and a greater/smaller number of corresponding color coordinate points according to some embodiments of the present invention;
FIG. 12 is a flowchart of a method for controlling lighting output according to some embodiments of the present invention;
FIG. 13 is a flowchart of a method for applying a digital lighting color library according to some embodiments of the present invention;
FIG. 14 is an exemplary diagram of an optimized color library diagram according to some embodiments of the present invention;
FIG. 15 is a schematic structural diagram of an apparatus for constructing a digital lighting color library according to some embodiments of the present invention;
FIG. 16 is a schematic structural diagram of an apparatus for coding a lighting color based on a digital lighting color library according to some embodiments of the present invention;
FIG. 17 is a schematic structural diagram of an apparatus for controlling lighting output according to some embodiments of the present invention;
FIG. 18 is a schematic structural diagram of an apparatus for applying a digital lighting color library according to some embodiments of the present invention; and
FIG. 19 is a schematic structural diagram of an electronic device according to some embodiments of the present invention.

### DETAILED DESCRIPTION OF THE EMBODIMENTS

The embodiments of the technical solutions of the present invention will be described in detail below in combination with the drawings. The following embodiments are provided only to more clearly illustrate the technical solutions of the present invention and are therefore presented merely as examples and should not be construed as limiting the scope of the present invention.

Unless otherwise defined, all technical and scientific terms used herein have the same meanings as commonly understood by those skilled in the art to which the present invention belongs. The terms used herein are intended solely for describing specific embodiments and are not intended to limit the present invention. The terms "comprising", "including", and "having" as well as any variations thereof, as used in the specification, the claims, and the foregoing drawings of the present invention, are intended to cover non-exclusive inclusion.

In the description of the embodiments of the present invention, the technical terms "first", "second", and the like are configured solely for distinguishing different objects and should not be construed as indicating or implying relative importance, or as implicitly specifying the number, a particular order, or a priority of the technical features indicated. In the description of the embodiments of the present invention, the term "a plurality of" means two or more (including two), and similarly, "a plurality of groups" refers to two or more groups (including two groups), and "a plurality of pieces" refers to two or more pieces (including two pieces), unless otherwise explicitly and specifically defined.

An "embodiment" mentioned in this specification means that a particular feature, structure, or characteristic described with reference to this embodiment can be included in at least one embodiment of the present invention. The phrase shown in various locations in this specification can not necessarily refer to a same embodiment, and is not an independent or alternative embodiment exclusive from another embodiment. It is explicitly and implicitly understood by those skilled in the art that embodiments described in this specification can be combined with another embodiment.

In the description of the embodiments of the present invention, the term "and/or" is merely configured to describe an associated relationship between associated objects and indicates that three relationships can exist. For example, "A and/or B" can mean: A alone, both A and B, or B alone. In addition, the character "/" in this specification generally indicates an "or" relationship between the associated objects before and after the character.

In the current field of lighting control, those skilled in the art generally rely on two approaches to carry out their work: one is to perform light regulation based on accumulated personal experience, and the other is to implement lighting settings by reference to existing color charts. However, both of these approaches have significant drawbacks.

The lighting control method based on personal experience inevitably introduces errors due to strong subjectivity and lack of quantifiable standards. Moreover, the experience levels of different skilled personnel vary, which makes the lighting control process complex and difficult to manage, thereby greatly increasing the difficulty of lighting control.

On the other hand, existing color charts are primarily designed based on the final visual effect presented by light scattering, rather than starting from the physical characteristics of the light itself. This design approach makes it difficult for color cards to accurately match lighting parameters in practical applications, thereby affecting the precision of lighting and failing to meet the requirements of scenarios demanding high-precision lighting effects.

To address the above technical problems, the embodiments of the present invention innovatively provide a complete system for constructing and applying a digital lighting color library. Specifically, the present invention creatively provides a method for constructing a digital lighting color library. This method deeply focuses on intrinsic color characteristics of lighting (such as core elements like value, hue, and chroma), and can accurately create a highly compatible digital lighting color library according to the customized diversified requirements of users.

On this basis, the present invention further provides a solution for color identification and coding based on the digital lighting color library. Through this solution, colors in the color library can be accurately recognized and assigned unique code identifiers, thereby providing a clear and precise data basis for subsequent lighting control.

In addition, the present invention further creatively designs a lighting control method based on the above-mentioned codes. The method is simple and convenient to operate, enabling a user to quickly and accurately control lighting by using the codes, which greatly improves the efficiency and accuracy of lighting control and provides a new solution for the field of lighting control.

### Embodiment 1

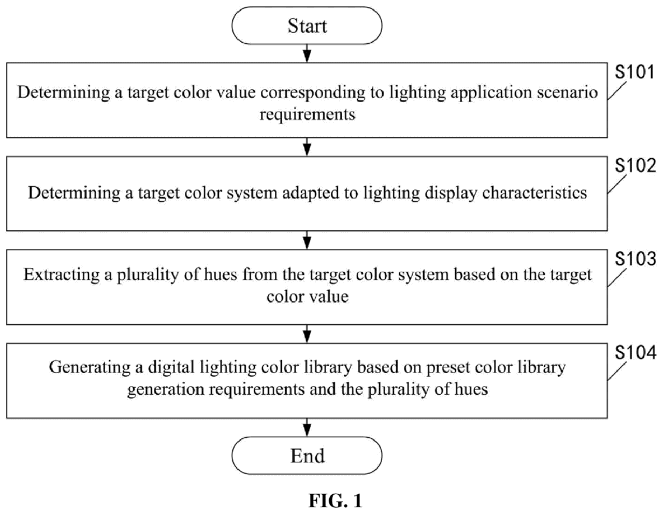

As shown in FIG. 1, some embodiments of the present invention provide a method for constructing a digital lighting color library, wherein the method for constructing the digital lighting color library includes:
S101. determining a target color value corresponding to lighting application scenario requirements;
S102. determining a target color system adapted to lighting display characteristics;
S103. extracting a plurality of hues from the target color system based on the target color value; and
S104. generating a digital lighting color library based on preset color library generation requirements and the plurality of hues.

In some embodiments, the method for constructing the digital lighting color library refers to a systematic process or a set of steps for creating a digital lighting color library. The method can convert color characteristics of lighting (such as value, hue, and chroma) into a digital form, which facilitates storage, transmission, and processing, thereby meeting requirements of various lighting application scenarios.

In some embodiments, the lighting application scenario requirement refers to specific requirements for lighting effects under different environments or purposes. For example, stage performances can require colorful and varied lighting effects; museum exhibitions can require soft and uniform illumination to protect exhibits; and commercial spaces can require lighting to create a specific atmosphere. Thus, these requirements determine the objectives and directions for constructing the digital lighting color library.

In some embodiments, the target color value refers to the brightness level of a color and is an important parameter for describing the color of lighting. In this method, target color value refers to a predetermined range of target color value or a specific value of target color value required for a target application scenario. The target color value will serve as a basis for subsequent hue extraction and color library generation. The target color value can be correspondingly converted based on the target color system after the target color system has been determined.

In some embodiments, the lighting display characteristics refer to physical and chemical characteristics of a lighting device when displaying colors, such as color temperature, color rendering index, and luminous efficiency. Different lighting devices can have different display characteristics, which affect the presentation of colors. Therefore, when a digital lighting color library is constructed, a color system adapted to the lighting display characteristics needs to be selected to ensure that the colors within the digital lighting color library can be accurately output by the target lighting device.

In some embodiments, the target color system refers to a specific color model or standard system selected based on lighting display characteristics during construction of the digital lighting color library, used for accurately describing and representing lighting colors. The Munsell color system can classify colors based on hue, value, and chroma. The CIE color system can describe colors using stimulus values based on the visual characteristics of the human eye. The RGB color system can describe colors based on the additive color mixing principle of three primary colors. It is evident that different color systems have different principles and applicable scenarios. When a color library is constructed, the selection must be combined with the display characteristics of the lighting device (such as gamut range, color reproduction capability, etc.). If the lighting is intended for stage performances, a color system capable of displaying rich colors can be chosen. If the lighting is intended for industrial inspection, a color system based on scientific measurement standards is preferable. This ensures that extracted hues accurately reflect the actual color of the lighting and that the generated color library meets the requirements.

In some embodiments, a hue refers to a basic property of a color, such as red, orange, yellow, green, blue, indigo, or violet. During construction of the digital lighting color library, a plurality of hues is extracted from the target color system based on the target color value. These hues will form the foundational color collection of the digital lighting color library.

In some embodiments, the preset color library generation requirements refer to a series of rules or standards that need to be followed when generating the digital lighting color library. The requirements can include the number, distribution, and uniformity of hues, as well as the storage format and access methods of the color library. The preset color library generation requirements contribute to ensuring that the generated color library meets practical application needs and has good usability and scalability.

In some embodiments, the digital lighting color library refers to a digital collection including a plurality of lighting colors generated through the aforementioned construction method. Each color in the color library can be represented by a specific code or identifier, which facilitates invocation and management in a lighting control system. Therefore, the construction of the digital lighting color library provides strong support for precise control and rapid switching of lighting effects.

For example, in a scenario of constructing a digital lighting color library for stage, the method can be based on the target color brightness corresponding to the lighting application scenario requirements, such as a lively atmosphere corresponding to a target color value of 8-10; a warm atmosphere corresponding to a target color value of 3-5; and a dynamic performance atmosphere corresponding to a target color value of 5-8.

In this case, because stage lighting devices have strong color performance and a wide color gamut, the method selects the Munsell color system, which is capable of presenting rich colors.

The method then extracts a plurality of suitable hues from the Munsell hue circle within each target color value range, such as red for a lively atmosphere, warm yellow for a warm atmosphere, and blue for a dynamic performance atmosphere.

Finally, according to the requirements that the color library should contain a plurality of atmosphere colors and allow rapid invocation, the extracted hues are coded or directly presented, thereby generating the digital lighting color library for stage.

For example, in a process of constructing a digital lighting color library for museum exhibition of cultural relics, in order to protect the cultural relics from damage by intense light while ensuring clear viewing by visitors, the method can determine a target color value of 20-40 for showcase lighting, and a target color value of 40-60 for wall display areas.

Subsequently, based on the requirements of accurate color reproduction for museum lighting, the CIE1931-XYZ color system can be selected.

Thereafter, the method can then extract neutral hues close to natural light and soft, such as off-white and light wood, from the CIE color system within the target color value ranges.

Finally, according to the requirements that the color library should satisfy both color accuracy and gentle light for cultural relics display, the extracted hues are coded, thereby generating the digital lighting color library for museum exhibition of cultural relics.

In these embodiments, the method can ensure that the generated color library closely matches actual application scenarios by accurately determining the target color value corresponding to lighting application scenario requirements, thereby avoiding deviations in lighting effects caused by improper setting of the target color value. An adapted target color system is selected based on lighting display characteristics, so that hues extracted from the system can accurately reflect the colors actually displayed by the lighting device, thereby greatly improving the accuracy and consistency of color description and effectively addressing the issue of lighting accuracy caused by conventional color charts due to their reliance on light scattering results. Meanwhile, the extraction of a plurality of hues based on the target color value helps enrich the variety of colors in the color library, providing a broader selection space for lighting design and meeting diverse creative needs. Finally, in combination with preset color library generation requirements, the plurality of hues are integrated to generate a digital lighting color library, which achieves standardized and digital management of lighting colors, and facilitates their storage, transmission, and retrieval. This makes lighting control simpler, more convenient, and more efficient, thus helping to reduce the difficulty and error in lighting control and further promoting the advancement of the lighting control field toward precision and intelligence.

To make the constructed digital lighting color library favorable the recognization by the human eye, in some embodiments, the determining the target color value corresponding to the lighting application scenario requirements includes:

determining the target color value based on the optimal color discrimination requirement of a human eye (human eye's optimal discrimination requirement for color) included in the lighting application scenario requirement.

In some embodiments, since an ability of the human eye to distinguish colors is affected by color brightness, the ability of the human eye to differentiate colors and perceive color details varies under different value conditions. Therefore, there exists a specific brightness (or brightness range) within which the human eye can most clearly and accurately distinguish various colors. This brightness (or brightness range) is the target color brightness (or target color brightness range) corresponding to the optimal color discrimination requirements of the human eye.

In some embodiments, within the value range of 0 to 10 in the Munsell system, the method can determine the value at which the human eye achieves the highest color resolution (i.e., the greatest number of colors distinguishable by the human eye on the chromaticity plane) as the target color value, wherein the target color value is Value 5 in the Munsell system.

For example, in a small indoor folk music performance, where the stage is arranged to be warm and rustic, and the lighting is configured to create a soothing and tranquil atmosphere, allowing the audience to immerse themselves in the music. In the Munsell system, light at value 5 is soft and non-glaring, which neither disrupts the serene atmosphere of the venue due to excessive brightness nor fails to clearly outline the singer and simple props. Under this value level, the human eye can well distinguish commonly used colors in folk performances, such as warm wood color and light yellow, and can perceive the warmth and comfort conveyed by these colors. Based on the optimal color discrimination requirements of the human eye, the target color value for this stage lighting application scenario is determined as value 5 in the Munsell system. A digital lighting color library constructed accordingly contributes to crafting the perfect performance atmosphere.

In these embodiments, the method can greatly improve the accuracy and practicality of constructing the color library. When constructing a digital lighting color library, the value might be determined primarily from broader perspectives such as scene atmosphere creation, without fully considering the discrimination characteristics of the human eye on color. This can lead to the generated color library that, while meeting basic illuminate and atmospheric needs in practical applications, may not allow the human eye to accurately and clearly distinguish the colors presented by the lighting, thus affecting the visual experience. After incorporating this definition, when determining the target color brightness, full consideration will be given to the color brightness level at which the human eye has the strongest ability to distinguish between colors. The target color brightness determined based on this enables lighting colors to be presented to the observer in the clearest and most accurate manner. The digital lighting color library constructed in this manner can ensure superior lighting color effects in practical applications, whether for stage performance, commercial display, or other scenarios, which significantly improves the quality and effectiveness of lighting control, and provides lighting designers with a higher-quality and more practical tool.

To enable the constructed digital lighting color library to have higher accuracy, in some embodiments, the determining the target color value based on an optimal color discrimination requirement of a human eye included in the lighting application scenario requirements includes:
determining the target color value based on lighting display effect requirements and the optimal color discrimination requirement of the human eye included in the lighting application scenario requirements.

In some embodiments, lighting display effect requirements refer to specific visual presentation requirements that lighting needs to achieve under different application scenarios. For example, in a commercial store, lighting display effect requirements can be to highlight colors, textures, and details of products through bright and vivid illumination. In a theater stage scenario, lighting display effect requirements can be to achieve rich color changes, strong contrasts between light and dark, and skillful shaping of light and shadow according to plot development and performance rhythm, thereby enhancing artistic expressiveness and visual impact of the stage, and guiding audience emotion and attention. In a museum exhibition hall, lighting display effect requirements are to provide soft, uniform illumination with accurate color rendition, which can clearly present details of cultural relics or artworks while avoiding damage to exhibits caused by strong light, and create a calm and solemn visiting atmosphere, enabling audiences to focus on appreciating exhibits.

For example, in a small immersive poetry recital stage, lighting display effect requirements are to create a tranquil and poetic atmosphere, with light that is soft, neither dazzling to disrupt the atmosphere nor too dim to affect visual presentation, and to outline the contours of the reciter while keeping the background faintly visible. Considering the optimal color discrimination requirement of a human eye, a value of 5 in the Munsell system provides moderate brightness, which avoids glare that could hinder color distinction while preventing excessive darkness that may obscure color details. This allows elegant color combinations on the stage to appear harmonious and well-layered. Therefore, the target color value for the scenario is comprehensively determined as value 5 in the Munsell system.

In these embodiments, the method can ensure that selected lighting colors accurately meet unique requirements of different scenarios during the process of selecting lighting colors. For example, in an art exhibition scenario, an appropriate color value enables selected lighting colors to properly highlight colors and details of exhibits, creating a visual atmosphere that aligns with the artistic theme. In a commercial performance stage, an appropriate color value can create lighting effects that are brilliant, soft, or striking according to performance style, thereby greatly enhancing the expressiveness and visual appeal of the performance. Meanwhile, fully considering the optimal color discrimination requirement of a human eye facilitates clear and accurate perception of colors presented by the lighting by human eyes, thereby avoiding color distortion or blurring caused by inappropriate value, and further improving comfort and accuracy of the visual experience. In summary, the target color value determined by comprehensively considering the unique requirements of different scenarios and the optimal color discrimination requirement of a human eye not only enables optimal lighting effects but also ensures precise presentation of colors.

To select a suitable color system, in some embodiments, the determining the target color system adapted to the lighting display characteristics includes:
determining the target color system from a preset color system library based on lighting display color accuracy requirements, color space richness requirements, and human-eye perception effect requirements.

In some embodiments, the lighting display color accuracy requirements (color accuracy requirements of lighting display) refer to a requirement that colors presented by lighting in a lighting application scenario accurately reproduce colors expected by a designer or user to the greatest extent possible. For example, in the stage lighting design, lighting is required to accurately present specific costume colors and prop colors to create a desired stage atmosphere. Therefore, color accuracy requirements emphasize the closeness between lighting colors and real colors and serve as one of the important indicators for evaluating lighting display quality.

In some embodiments, a color space refers to a mathematical model for describing and representing colors, defining relationships and ranges among three fundamental attributes of color, such as hue, chroma, and value. Different color spaces have different characteristics and applicable ranges.

In some embodiments, the richness requirements refer to a requirement that the color system covers as wide a color range as possible in lighting display to satisfy diverse color demands under various complex scenarios. For example, in artistic creation or high-end exhibition scenarios, certain very unique, vivid, or subtle colors can be needed. This requires that the color space defined by the color system is sufficiently large to accommodate these rich colors, providing lighting designers with more creative possibilities.

In some embodiments, the human eye is the ultimate organ for receiving and perceiving the lighting colors. The human-eye perception effect requirements emphasize that determination of the color system should fully consider perceptual characteristics of the human eye for color. A proper color system should enable colors displayed by lighting to conform as closely as possible to the visual perception habits of the human eye, allowing observers to comfortably and accurately perceive color information conveyed by lighting. For example, the system should avoid situations in which colors are excessively dazzling or contrasts are too strong or too weak, which can cause visual fatigue or color perception distortion of the human eye.

In some embodiments, a preset color system library refers to a collection including different color systems that are collected and organized in advance. These color systems can be developed based on different theories, standards, or application requirements, such as the Munsell color system, the RGB color system, and the CMYK color system. The preset color system library can provide a rich selection range for determining a target color system. By evaluating and comparing the various color systems in the library, the method can identify a color system most suitable for current lighting display requirements.

For example, in an application scenario of preparing a large-scale musical stage performance, actors on stage wear elaborate red costumes, deep blue cloaks, and the like, and lighting is required to accurately reproduce these colors to avoid color deviations affecting performance quality. Meanwhile, for scenarios ranging from a fantastical forest to a mysterious palace, lighting is required to present various delicate, unique, and rich colors to create a realistic scenario atmosphere. In addition, lighting needs to ensure that colors can be comfortably and accurately perceived by human eyes at different positions and durations. Comprehensive consideration of these requirements, comparative screening is conducted within a preset library of multiple color systems. The Munsell color system was ultimately selected as the target color system suited to the display characteristics of this stage lighting, owing to its precise color definition, rich color gradation, and alignment with human-eye perception.

In these embodiments, the method can ensure that colors presented by lighting are highly consistent with preset colors in terms of color accuracy. In terms of color space richness, lighting can present more diverse and delicate colors. By considering human-eye perception effect, lighting colors can be comfortably and accurately perceived under different environments and viewing conditions, thereby reducing visual fatigue and enhancing audience viewing experience. Determining a target color system from the preset color system library in consideration of these integrated requirements provides a scientific and precise basis for lighting design, and ensures high quality and stability of lighting display.

To provide a foundation for refined construction of a color library, in some embodiments, when a target color system is the Munsell color system and a target color value is a Value 5 in the Munsell color system, extracting the plurality of hues from the target color system based on the target color value includes:
extracting 40 hues visually equidistant from the Munsell color system based on Value 5.

In some embodiments, the Munsell color system refers to a color representation system proposed by American artist and teacher A. H. Munsell in 1905. The system provides a systematic and quantitative description of three attributes of color, namely Hue, Value, and Chroma. In the Munsell color system, the hue circle is divided into 10 principal hues, each of which is further subdivided into 10 equal divisions, forming a total of 100 hues. The color value ranges from 0 (black) to 10 (white), with a Value 5 positioned in the middle, representing a medium level of color brightness. Saturation: chroma reflects purity or vividness of a color, where a larger value corresponds to a more vivid color, and a smaller value corresponds to a color closer to gray. Therefore, the Munsell color system, using this three-dimensional coordinate system, can accurately describe and locate each color.

In some embodiments, a color with a value of 5 is neither excessively bright and dazzling like a high color value, nor overly dark like a low color value. In scenarios requiring a balance between color presentation and visual comfort, the Value 5 is a commonly used choice. For example, in the stage lighting, a color with a value of 5 can serve as a base color value for constructing a color library capable of presenting rich stage effects.

In some embodiments, visually equidistant refers to a condition in which differences between the extracted hues are equal in human visual perception. That is, when observing these hues, human eyes perceive color changes between the hues as uniform and consistent. For example, on the hue circle, if hues are selected according to certain intervals and rules such that visual differences between adjacent hues are approximately equal, the selected hues are visually equidistant.

For example, the 40 hues can include 5R, 7.5R, 10R, 2.5YR, 5YR, 7.5YR, 10YR, 2.5Y, 5Y, 7.5Y, 10Y, 2.5GY, 5GY, 7.5GY, 10GY, 2.5G, 5G, 7.5G, 10G, 2.5BG, 5BG, 7.5BG, 10BG, 2.5B, 5B, 7.5B, 10B, 2.5PB, 5PB, 7.5PB, 10PB, 2.5P, 5P, 7.5P, 10P, 2.5RP, 5RP, 7.5RP, 10RP, and 2.5R in the Munsell color system.

In these embodiments, the method can, by virtue of its comprehensive and systematic color collection, adequately meet the requirements for color diversity in design, matching, and application across different scenarios. Further, through the uniform distribution characteristic of hues visually equidistant, it ensures that each hue presents a balanced differential effect in visual perception, avoiding abrupt color transitions, and providing strong support for accurate expression and harmonious presentation of colors.

To fully represent colors, in some embodiments, the method further includes:
extracting respective saturation for each of the 40 hues from the Munsell color system.

In some embodiments, the saturation corresponding to a hue refers to Munsell chroma of the lighting color, which specifically refers to the color purity or vividness of the corresponding hue at a specific color value, such as a Value 5. It reflects the degree to which a color deviates from neutral gray. This saturation is typically quantified using a numerical saturation value (where a larger value represents higher saturation and more vivid color). Each hue corresponds to a different saturation value due to variations in its color composition and saturation. For example, hues within the red color series may have saturation values at different levels ranging from low to high, corresponding to reds of different vividness levels such as light pink, true red, and deep red.

In these embodiments, the method can accurately quantify the vividness of each hue at a specific color value, thereby constructing a color database including dual dimensions of hue and saturation, and providing more detailed parametric references for color design.

To further illustrate the construction of the digital lighting color library, in some embodiments, the generating the digital lighting color library based on preset color library generation requirements and the plurality of hues includes:
generating the digital lighting color library based on the preset color library generation requirements, the 40 hues, and the respective saturation for each of the 40 hues.

In these embodiments, the method can accurately construct a lighting color database with comprehensive dimensions and precise data. By integrating dual information of hues and saturation, the method not only meets the demand for color variety (hue) in different scenarios but also allows precise control over color vividness (saturation). This provides a highly customized color selection solution for lighting design, ensuring accurate color expression and perfect presentation of artistic effects in different application scenarios, such as stage lighting and landscape illumination, etc., while enhancing standardization and digitalization level of color management.

To construct a digital lighting color library that is more suitable for use, in some embodiments, the preset color library generation requirements include at least color library structure requirements, hue hierarchy requirements, display layout requirements, and element association requirements.

In some embodiments, the color library structure requirements refer to the need for explicit specification of the overall architecture of the color library during the generation of the digital lighting color library, including hierarchical division of color parameters such as hue, saturation, and color value. A reasonable color library structure helps improve manageability, scalability, and usability of color data, ensuring that users can quickly locate and acquire desired color information.

In some embodiments, the hue hierarchy requirements refer to a requirement that division of hues in the color library satisfies a certain hierarchy, that is, a classification of hues from a macro level to a micro level and from broad categories to specific categories. By reasonably dividing hues according to the hierarchy, the method can meet requirements for color granularity in different application scenarios and improve the flexibility and accuracy of color selection.

In some embodiments, the display layout requirements refer to the standardization of how color information is presented in the display or interactive interface of the color library, including the arrangement of color samples, the labeling positions of color names or numbers, and the display format of color parameters. A proper display layout can enhance user experience, enables users to intuitively and quickly browse and compare different colors, and facilitates user operations such as color selection, editing, and saving.

In some embodiments, the element association requirements refer to the specification of how color elements are associated with other relevant information (such as saturation, color names, color codes, etc.) within the color library. Through clear element association, the practicability and the guidance of the color library can be improved, helping users better understand and apply color information.

In these embodiments, the method can, through explicit color library architecture design requirements, ensure that color data is organized and stored in a logical and systematic manner. This facilitates the balanced distribution and hierarchical arrangement of hues, thereby forming a digital color library that combines scientific classification, operational convenience, and application guidance value, significantly improving the efficiency and professionalism of color management.

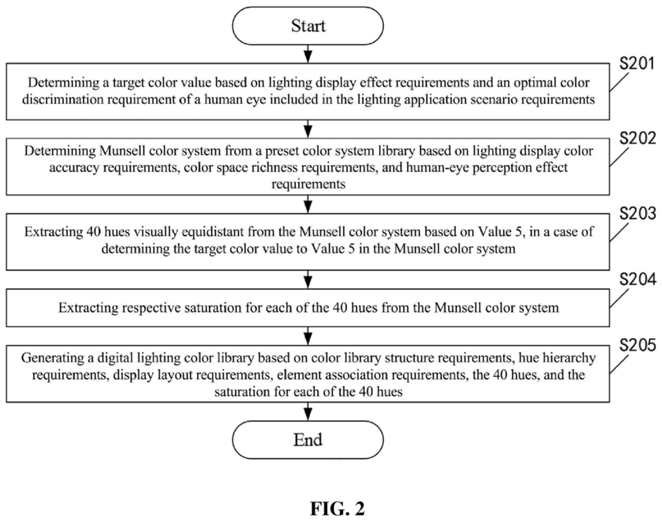

To make the objectives, technical solutions, and advantages of the present invention clearer, the following clearly and completely describes the technical solutions of the present invention. In some embodiments, as shown in FIG. 2, the method for constructing the digital lighting color library includes:
S201. determining a target color value based on lighting display effect requirements and an optimal color discrimination requirement of a human eye included in the lighting application scenario requirements;
S202. determining Munsell color system from a preset color system library based on lighting display color accuracy requirements, color space richness requirements, and human-eye perception effect requirements;
S203. extracting 40 hues visually equidistant from the Munsell color system based on Value 5, in a case of determining the target color value to Value 5 in the Munsell color system;
S204. extracting respective saturation of each of the 40 hues from the Munsell color system; and
S205. generating the digital lighting color library based on color library structure requirements, hue hierarchy requirements, display layout requirements, element association requirements, the 40 hues, and the respective saturation for each of the 40 hues.

### Embodiment 2

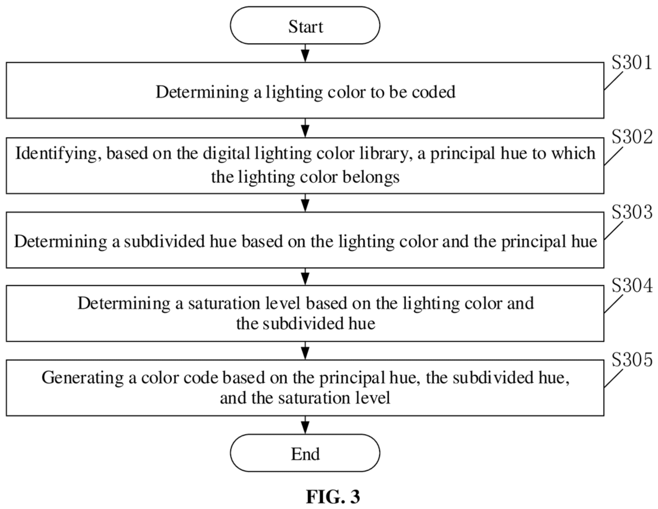

As shown in FIG. 3, some embodiments of the present invention provide a method for coding a lighting color based on a digital lighting color library, where the digital lighting color library is constructed using the method for constructing the digital lighting color library according to Embodiment 1, and the method for coding a lighting color based on a digital lighting color library includes:
S301. determining a lighting color to be coded;
S302. identifying, based on the digital lighting color library, a principal hue to which the lighting color belongs;
S303. determining a subdivided hue based on the lighting color and the principal hue;
S304. determining a saturation level based on the lighting color and the subdivided hue; and
S305. generating a color code based on the principal hue, the subdivided hue, and the saturation level.

In some embodiments, the lighting color to be coded refers to a specific lighting color requiring color coding. The lighting color can be collected from an actual scenario or designated according to design requirements.

In some embodiments, the principal hue refers to a major hue category to which a lighting color belongs. In the digital lighting color library, the principal hues correspond to 10 principal hues in the Munsell color system.

In some embodiments, the subdivided hue refers to a hue category further subdivided from the principal hue. In the digital lighting color library, the subdivided hues correspond to 40 subdivided hues in the Munsell color system.

In some embodiments, the saturation level refers to the vividness or purity of a lighting color. In the digital lighting color library, the saturation levels are associated with the subdivided hues, where each subdivided hue corresponds to a different number of saturation levels. The saturation levels are configured to code and distinguish lighting colors of varying vividness.

In some embodiments, the color coding refers to a process of converting lighting colors into a specific format or code. Various attributes (such as principal hue, subdivided hue, and saturation level) of the lighting color can be represented in a digital form by coding, so that the identification, processing, and application by a system or user are facilitated.

In these embodiments, the method can not only utilize the macro-classification of basic hues in the color library to quickly narrow down the color range, but also enhance the accuracy of color identification through the dual verification of subdivided hues and saturation levels. Ultimately, it generates a coding system including multi-dimensional color parameters, which effectively addresses problems of the ambiguity of traditional color identification and the inability to perform efficient retrieval. Thereby, the method provides a unified and extensible color identification solution for a lighting control system, so that the accuracy and efficiency of lighting design, scenario transitions, and cross-device color management are significantly enhanced.

To more comprehensively apply lighting color coding, in some embodiments, the determining a lighting color to be coded includes:
detecting a lighting color of a target lighting by using a spectral detector; or
determining the lighting color of the target lighting based on lighting output requirements.

In some embodiments, the spectral detector refers to an instrument for measuring and analyzing wavelength and intensity distribution of light. In lighting color detection, the spectral detector can capture light emitted by the target lighting and decomposes the light into light components of different wavelengths, thereby accurately determining color characteristics of the lighting, such as color temperature, color rendering index, and specific spectral distribution.

In some embodiments, the target lighting refers to a specific lighting that needs to be detected or identified. In the context of the present invention, the target lighting refers to a lighting object for which color coding is to be performed. The target lighting can be any type of lighting, such as LED lighting, fluorescent lighting, halogen lighting, or illumination lighting in a specific scenario or application.

In some embodiments, the lighting output requirements refer to desired values or specifications set for parameters, such as lighting color, brightness (which is conceptually different from the aforementioned color value), and color temperature, according to specific application scenarios or design requirements. When the lighting colors of the target lighting are determined, the lighting colors can be selected or set based on expected visual effects, atmosphere creation, or functional requirements. For example, in the stage lighting design, different lighting colors may need to be set according to the plot requirements to create specific emotional atmospheres.

In some embodiments, the differences between brightness and value (lightness) are described as follows. Brightness is a physical concept and is mainly used to represent intensity of light reflected from a surface, with a unit of candela per square meter (nit). Brightness is applied in fields such as illumination and photography to control illumination effects and adapt to ambient light conditions, and is affected by luminous intensity of a light source and reflectivity of an object. Value, however, belongs to a concept of color science and is used to reflect brightness or darkness of a color, relating to color characteristics and human-eye visual perception. It is used in artistic fields such as painting and design to create hierarchy and guide visual attention. Different hues have different values, which can be adjusted by adding black or white.

For example, a sensor built into a spectral detector converts and analyzes optical signals of a target lighting. After processing by internal algorithms, color parameters of the lighting are directly displayed on a display screen of the spectral detector, such as a color temperature value (for example 3000 K representing warm white), a spectral curve diagram (visually showing intensity distribution of light at different wavelengths), and RGB values (for example R:255, G:200, B:100 representing proportions of red, green, and blue primary colors). Based on these data, a lighting color can be accurately determined.

For example, a user can intend to control output of a lighting color described as "vibrant orange". The "vibrant orange" constitutes a lighting output requirement.

In these embodiments, the method, by detecting the lighting color of the target light via a spectrum detector, can rapidly and accurately obtain detailed spectral-level data of the light, such as color temperature and spectral distribution, through scientifically precise instrumental analysis means, thereby accurately determining the lighting color and avoiding errors from subjective human eye judgment. Determining lighting colors of the target lighting based on lighting output requirements provides users with an ability to flexibly and directly specify required lighting colors according to specific application scenarios, emotional atmosphere, or functional purpose, thereby meeting personalized and diversified lighting design requirements. The combination of these two approaches not only ensures the accuracy of color determination but also accommodates flexibility in practical applications, significantly enhancing the efficiency and quality of lighting color application.

To limit a basis for coding and ensure coding effectiveness, in some embodiments, the digital lighting color library includes a principal hue circle composed of a plurality of principal hues, a subdivided hue circle composed of a plurality of subdivided hues, and a saturation circle corresponding to each of the plurality of subdivided hue.

In some embodiments, the principal hue circle, the subdivided hue circle, and the saturation circle refer to a method of representing the digital lighting color library in three circular forms.

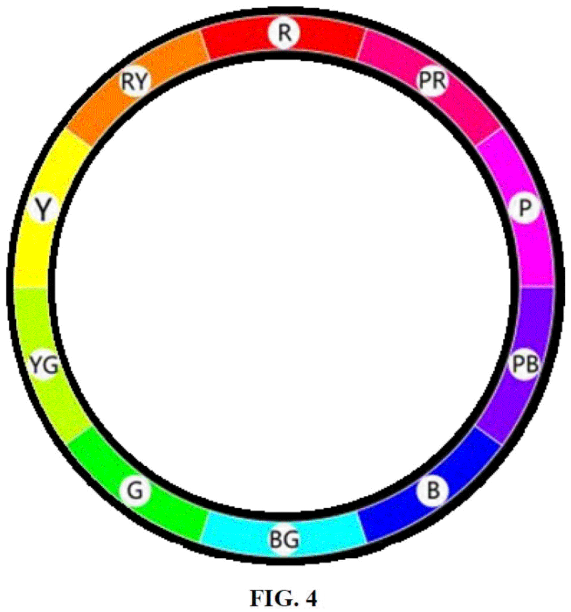

For example, the principal hue circle is based on five primary hues of red (R), yellow (Y), green (G), blue (B), and purple (P), and five intermediate hues of red-yellow (RY), yellow-green (YG), blue-green (BG), purple-blue (PB), and purple-red (PR) in the Munsell hue system. Referring to FIG. 4, FIG. 4 shows a principal hue circle composed of 10 principal hues. The hue circle is obtained by equally dividing a circumference into 10 portions and includes a total of 10 principal hues.

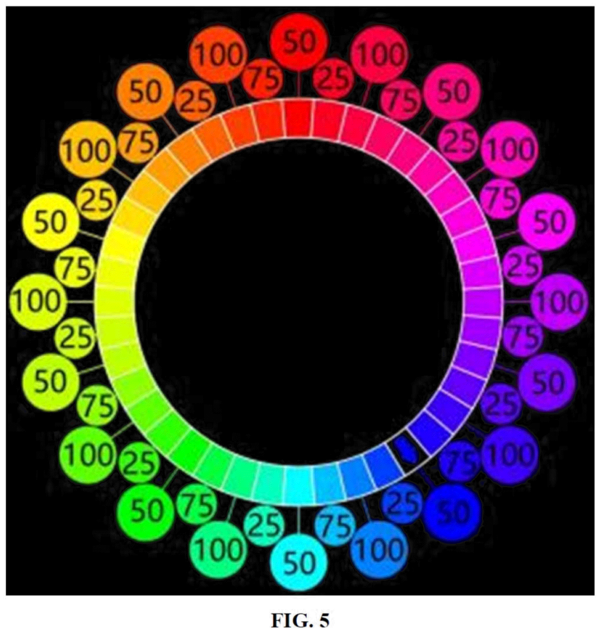

For example, each principal hue is further divided into 4 levels, thereby forming 40 subdivided hues. For example, red is divided into 100R, 75R, 50R, and 25R. Referring to FIG. 5, FIG. 5 shows a subdivided hue circle composed of 40 subdivided hues.

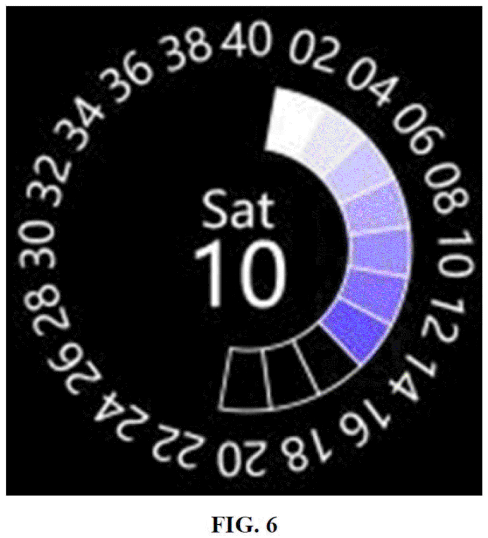

For example, the method divides saturation from low to high into 20 equal levels, which are respectively represented by even numbers, where 02 represents a lowest level and 40 represents a highest level, and a larger numerical value indicates higher vividness. Meanwhile, when facing different subdivided hues, upper limit values of saturation thereof are different. For example, a maximum saturation value of blue is 16 (8 grids). Referring to FIG. 6, FIG. 6 shows a schematic diagram of a saturation circle, where an upper saturation limit is 14 (7 grids), and a currently selected saturation is 10.

In some embodiments, a maximum saturation achievable by the 40 subdivided hues is 38 (19 grids, with a total of 20 grids).

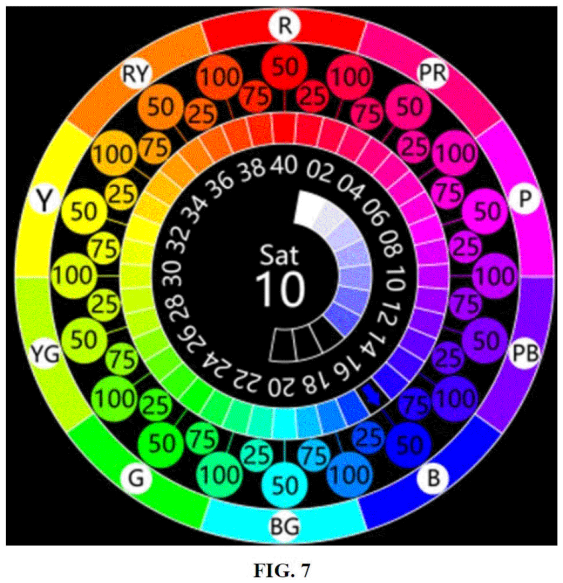

For example, FIG. 7 shows a schematic diagram of a digital lighting color library.

In these embodiments, the digital lighting color library provides a macroscopic framework for lighting color classification by constructing a principal hue circle composed of a plurality of principal hues, thereby facilitating rapid positioning of major color categories; a subdivided hue circle composed of a plurality of subdivided hues further refines color granularity, enabling accurate distinction of similar hues and meeting requirements for identifying subtle color differences; and a saturation circle corresponding to each subdivided hue fully presents distributions of different saturation levels under the subdivided hues, such that the vividness of the lighting color has a clear quantitative standard. The principal hue circle, the subdivided hue circle, and the saturation circle cooperate with each other to provide a comprehensive and refined color reference system for lighting color coding, retrieval, matching, and application, thereby effectively improving scientific rigor and accuracy of lighting color management.

To effectively obtain a principal hue, a subdivided hue, and a saturation level, in some embodiments, the identifying, based on the digital lighting color library, a principal hue to which the lighting color belongs includes:
determining a principal hue most similar to the lighting color in the principal hue circle;
the determining a subdivided hue based on the lighting color and the principal hue includes:
determining, in the subdivided hue circle, a plurality of target subdivided hues under the principal hue, and determining a subdivided hue most similar to the lighting color from the plurality of target subdivided hues; and
the determining a saturation level based on the lighting color and the subdivided hue includes:
determining a saturation level most similar to the lighting color in the saturation circle corresponding to the subdivided hue.

In some embodiments, the principal hue circle refers to a basic structure used for color classification in a digital lighting color library, and it is composed of a plurality of principal hues. The plurality of principal hues are arranged in a specific order to form a circular system, encompassing major categories of colors. During the process of lighting color identification, the principal hue circle serves as a macroscopic classification tool, assists in rapidly determining an approximate hue range to which a lighting color belongs, provides a basic direction for subsequent more precise color analysis, and enables a color identification process to be more organized and systematic.

In some embodiments, the lighting color refers to specific color characteristics presented by a target light, which includes multiple color attributes such as hue, value, and chroma. In practical applications, differences occur in the lighting color due to factors including a light source type, a light-emitting principle, and environmental factors.

In some embodiments, the subdivided hue circle refers to a color structure further refined based on the principal hue circle, and it is composed of a plurality of subdivided hues. The subdivided hue circle performs an in-depth division for each principal hue, subdividing a previously broader principal hue into more specific hue categories. During the process of lighting color coding, upon determining the principal hue to which the lighting color belongs, the subdivided hue circle comes into play. By determining multiple target subdivided hues under that principal hue and selecting the subdivided hue most similar to the lighting color from among them, a more precise localization of the lighting color in terms of hue is achieved, thereby improving the accuracy of color identification.

In some embodiments, the subdivided hue refers to a specific color unit in the subdivided hue circle, and it is a further division of the principal hue. Each subdivided hue has unique color characteristics, and subtle differences exist between adjacent subdivided hues. In the color coding process based on the digital lighting color library, the subdivided hue is an important parameter for describing the hue attribute of the lighting color. By determining the subdivided hue most similar to the lighting color, the hue characteristics of the lighting color can be described more accurately, providing key information for generating precise color coding and enabling the digital representation of the lighting color to be more refined and accurate.

In some embodiments, the saturation circle refers to a color representation system corresponding to the subdivided hue, and it is configured to quantitatively describe the vividness of a color. In the saturation circle, different positions represent different saturation levels, and a higher saturation level indicates a more vivid color, whereas a lower saturation level indicates a duller color. In the lighting color coding process, after determining the subdivided hue to which the lighting color belongs, the saturation circle is used to determine, under the corresponding subdivided hue, a saturation level most similar to the lighting color.

In some embodiments, the saturation level refers to a quantitative metric used in the Munsell color system to measure the vividness of a color. In lighting color coding, the saturation level reflects the vividness of a lighting color relative to a subdivided hue to which the lighting color belongs. By determining the saturation level most similar to the lighting color in the saturation circle corresponding to the subdivided hue, the saturation characteristics of the lighting color can be described accurately. This parameter is crucial for the digital expression of a lighting color, which ensures that the lighting color is not only clearly defined in terms of hue but also accurately quantified in terms of vividness, thereby providing more detailed and accurate color information for fields such as lighting control and design, and facilitating richer lighting effects and more precise color matching.

In these embodiments, the method can first locate an approximate hue range in a principal hue circle, then precisely determine a subdivided hue in a subdivided hue circle, and finally determine a saturation level in a saturation circle, thereby collectively achieving comprehensive and precise identification of a lighting color from a macroscopic to a microscopic level and from hue to saturation. The method effectively improves the accuracy and fineness of lighting color identification, provides a reliable and precise color basis for lighting color coding, control, and applications, and ensures that lighting colors can be accurately reproduced and expressed in different scenarios.

To more accurately determine a principal hue of a lighting color, in some embodiments, the determining a principal hue most similar to the lighting color in the principal hue circle includes:
determining, in a chromaticity diagram, a color coordinate range corresponding to each principal hue in the principal hue circle;
determining a lighting color coordinate of the lighting color;
identifying a target color coordinate range to which the lighting color coordinate belongs; and
determining a principal hue corresponding to the target color coordinate range as the principal hue to which the lighting color belongs.

In some embodiments, the chromaticity diagram refers to a two-dimensional graphic used to represent color characteristics, and it is also referred to as a chroma diagram or a chromaticity coordinate diagram. The chromaticity diagram presents the position of a color in a color space in an intuitive graphic manner through a specific coordinate system. In the chromaticity diagram, different colors correspond to different coordinate points, and the coordinate points can clearly describe attributes of the colors, such as hue and purity.

In some embodiments, the color coordinate range refers to a range of coordinate values corresponding to a specific color region in the chromaticity diagram. For each principal hue in the principal hue circle, there is a corresponding color region in the chromaticity diagram, and the color region is composed of a set of color coordinate points, and the range of values for these color coordinate points constitutes a color coordinate range of the principal hue. By determining the color coordinate range, the positions and boundaries of different principal hues in the color space can be clearly defined.

In some embodiments, the lighting color coordinate refers to specific coordinate values used to indicate the position of the target lighting color in the chromaticity diagram. In the lighting color analysis process, the coordinate value of the lighting color in a color space can be obtained through specific measurement devices and methods, and the coordinate value is the lighting color coordinate.

In some embodiments, the target color coordinate range refers to a range of coordinate values in the chromaticity diagram corresponding to a specific color region identified based on a determined lighting color coordinate, and the specific color region corresponds to the lighting color coordinate. After determining the lighting color coordinate, by comparing the lighting color coordinate with color coordinate ranges of each principal hue in a principal hue circle, a specific color region to which the lighting color coordinate belongs can be identified, and a range of coordinate values corresponding to the specific color region is the target color coordinate range.

For example, when the operators identify a principal hue to which a lighting color of a new LED light belongs, the operators first determine, in a chromaticity diagram, that a color coordinate range corresponding to a red principal hue is approximately from (0.65, 0.30) to (0.72, 0.28); subsequently, measure the LED light using a spectrophotometer to determine its lighting color coordinate of (0.68, 0.29); then find that the lighting color coordinate falls within the color coordinate range of the red principal hue by comparison, thereby the target color coordinate range to which the lighting color coordinates belong is identified as the range corresponding to red; and finally determine a principal hue corresponding to the target color coordinate range as red. That is, the principal hue to which the lighting color of the LED light belongs is red.

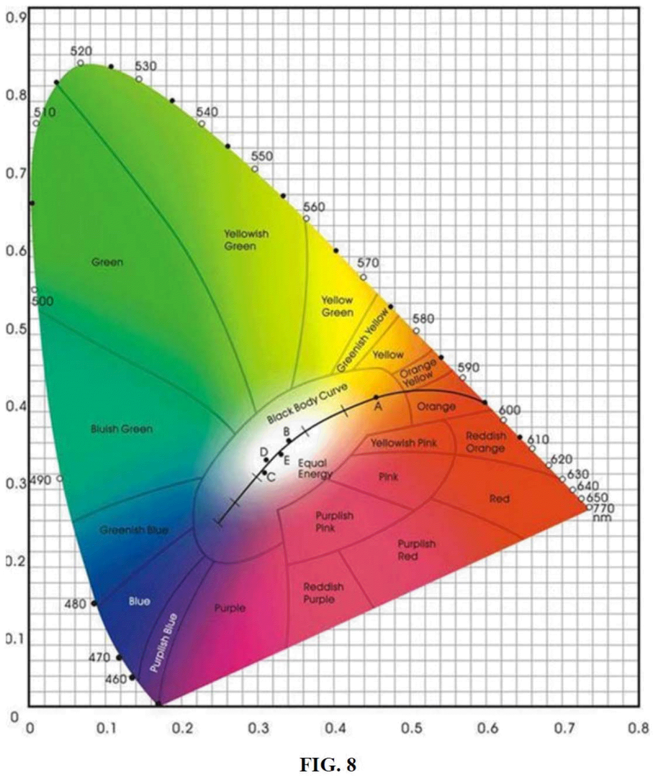

For example, a chromaticity diagram can be a CIE1931 colorimetric diagram as shown in FIG. 8.

In these embodiments, the method can efficiently and accurately complete the classification of a lighting color at a principal hue level, providing a reliable basis for subsequent more detailed color analysis and applications, avoiding subjective errors in color classification, and greatly improving the accuracy and scientific reliability of lighting color identification.

To more accurately determine a subdivided hue of a lighting color, in some embodiments, the determining a subdivided hue most similar to the lighting color from the plurality of target subdivided hues includes:
determining, based on a color coordinate of each target subdivided hue and a preset color tolerance, target color coordinate ranges corresponding to the plurality of target subdivided hues;
determining a lighting color coordinate of the lighting color;
identifying a target color coordinate range to which the lighting color coordinate belongs; and
determining a target subdivided hue corresponding to the target color coordinate range as a subdivided hue to which the lighting color belongs.

In some embodiments, the target subdivided hue refers to the subdivided hue in the subdivided hue circle that is selected based on the determined principal hue and is potentially close to the target lighting color. Because the number of subdivided hues is large, when a subdivided hue to which a lighting color belongs is identified, the range is first narrowed based on the principal hue to determine several possible target subdivided hues, and then precise matching is performed among the several target subdivided hues.

In some embodiments, the preset color tolerance refers to a parameter used to measure a range of color differences. In the actual color identification and matching processes, due to factors such as measurement errors and the gradual variation of colors, it is difficult to require a lighting color coordinate to exactly match a subdivided hue coordinate. The preset color tolerance is used to set an acceptable error range, and when a difference between a lighting color coordinate and a color coordinate of a subdivided hue falls within the preset color tolerance, the lighting color is considered to belong to the subdivided hue.

In some embodiments, the target color coordinate range refers to a coordinate range determined based on the color coordinate of each target subdivided hue and the preset color tolerance. For each target subdivided hue, a coordinate range is formed by expanding outward from the color coordinate of the target subdivided hue as the center according to the preset color tolerance, and the coordinate range is the target color coordinate range. When a lighting color coordinate of a lighting color falls within the target color coordinate range, the lighting color can be determined to belong to the target subdivided hue.

For example, when determining a subdivided hue for a warm yellow wall lamp, the method first selects three target subdivided hues of "light goose yellow", "beeswax yellow", and "ginger yellow" from a subdivided hue circle based on a determined principal hue of "yellow". Based on the color coordinate of each target subdivided hue, for example, a color coordinate of "light goose yellow" is (0.42, 0.48), in combination with a preset color tolerance of 0.02, its target color coordinate range is determined to be approximately within coordinate intervals such as (0.40-0.44, 0.46-0.50). A spectrophotometer measures the wall lamp's lighting color coordinate as (0.41, 0.47). By comparison, it is found that the lighting color coordinate falls within the target color coordinate range of "light goose yellow". Finally, the target subdivided hue corresponding to the target color coordinate range is determined as "light goose yellow", indicating that the subdivided hue to which the lighting color of the wall lamp belongs is "light goose yellow".

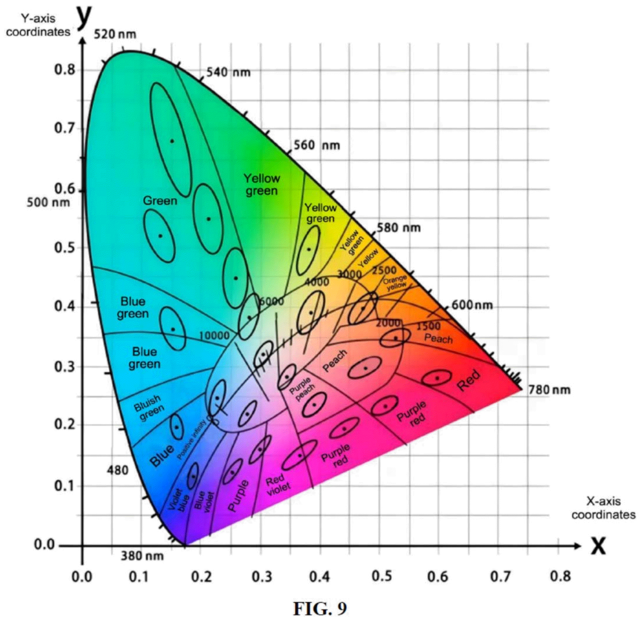

For example, FIG. 9 is a conceptual schematic diagram illustrating the division of target color coordinate ranges based on the target color coordinates of target subdivided hues and a preset color tolerance. It should be noted that FIG. 9 is not a schematic diagram of the division of color coordinate ranges for subdivided hues.

In these embodiments, the method can efficiently and accurately perform matching of a lighting color at the subdivided hue level, which effectively avoids misjudgments caused by slight color differences or measurement errors, and greatly improves the accuracy and reliability of lighting color identification.

To more accurately determine a saturation level of a lighting color, in some embodiments, the determining a saturation level most similar to the lighting color in the saturation circle corresponding to the subdivided hue includes:
determining, based on the saturation circle corresponding to the subdivided hue, saturation grading points in a chromaticity diagram;
determining a lighting color coordinate of the lighting color;
acquiring a target saturation grading point nearest to the lighting color coordinate; and
determining a saturation level corresponding to the target saturation grading point as the saturation level of the lighting color.

In some embodiments, the saturation grading point refers to a specific coordinate position on the saturation circle corresponding to a different saturation level. Each point represents a specific saturation level, and the saturation difference between adjacent grading points is fixed. In a chromaticity diagram, these points are distributed in a specific region corresponding to a subdivided hue and arranged along the saturation direction. By determining the grading points, continuous changes in saturation can be discretized into discrete, specific levels, so that the saturation of the lighting colors can be accurately described and classified.

In some embodiments, the target saturation grading point refers to a point, among a plurality of grading points on a saturation circle, that is closest to a lighting color coordinate of a lighting color. When a saturation level of the lighting color is determined, it is first necessary to obtain the lighting color coordinate, then calculate distances between the coordinate and each saturation grading point, and identify the point with the minimum distance, wherein the point is the target saturation grading point. A saturation level corresponding to the target saturation grading point is the saturation level most similar to the lighting color.

For example, based on the saturation ring, a series of saturation grading points, such as (0.2, 0.3) and (0.22, 0.32), are located in a chromaticity diagram; a professional instrument measures a lighting color coordinate of (0.21, 0.31); by calculating distances between the lighting color coordinate and each grading point, it is found that the saturation grading point (0.22, 0.32) is closest to the lighting color coordinate, thereby obtaining the target saturation grading point; finally, a saturation level corresponding to the target saturation grading point is determined as level 7, indicating that the saturation level of the lighting color is level 7.

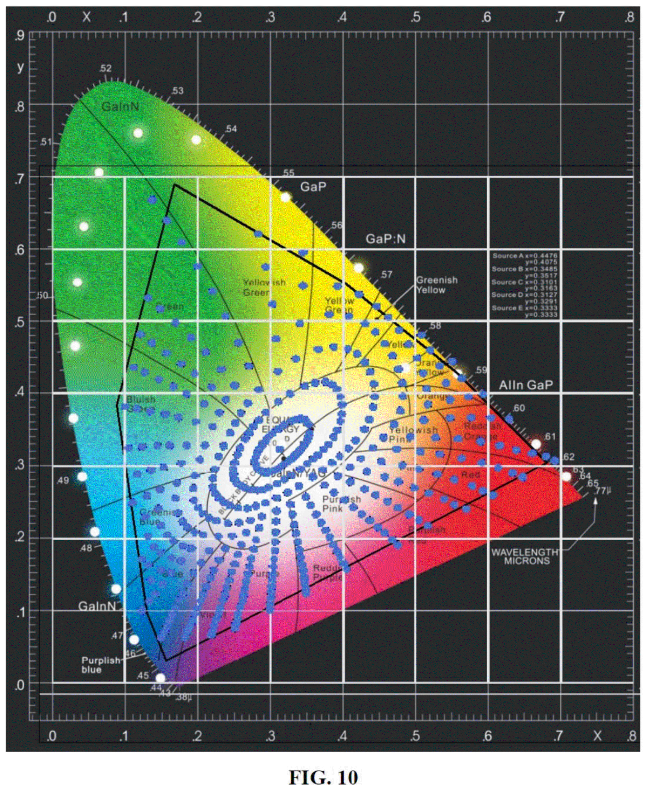

For example, FIG. 10 shows the representation effect of saturation grading points in a chromaticity diagram. The saturation grading points within the black frame in FIG. 10 are recorded as saturation levels.

For example, the method is a color segmentation performed on a CIE1931 chromaticity diagram under consideration of a color tolerance, and the segmentation results include a total of 497 colors, each corresponding to its own color coordinates. Thus, it can be understood that within the black frame in FIG. 10, there are 497 colors (including the white point), corresponding to all colors in the digital lighting color library.

For example, when a 7-color gamut is selected in FIG. 10, under the condition of selecting a 7-color gamut, the method can determine 413 colors (including the central white point) under 40 subdivided hues and their corresponding color coordinates. Similarly, when a 6-color, 5-color, 4-color, or 3-color gamut is selected, corresponding numbers of colors and the corresponding color coordinates can be determined.

For example, FIG. 10 shows 10 preset principal hues and 40 subdivided hues formed by dividing each principal hue into four equal parts. Because each subdivided hue has a plurality of corresponding saturation levels, FIG. 10 also shows different color coordinate points corresponding to different saturation levels within each subdivided hue. Thus, FIG. 10 specifically illustrates 497 color coordinate points (including the central white point) delineated on a CIE1931 chromaticity diagram, and these color coordinate points correspond to different principal hues, subdivided hues, and saturation levels.

In some embodiments, since a light source cannot cover all colors in the CIE1931 chromaticity diagram, as shown in FIG. 10, when facing a 7-color gamut range, the selectable color coordinate points for the light source are 413 (including the central white point). That is, the color coordinate outside the gamut cannot be achieved.

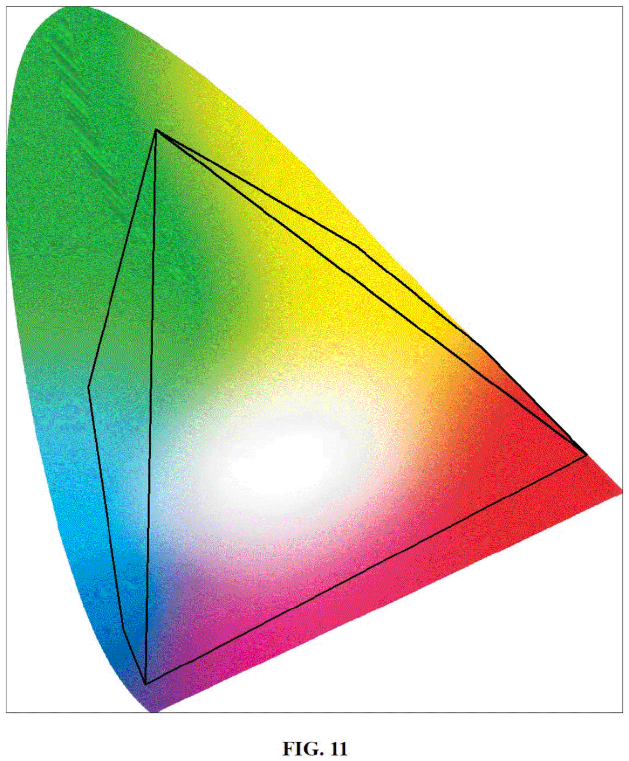

For example, referring to FIG. 11, FIG. 11 shows the relationship between the width/narrowness of a color gamut range and the greater/smaller number of corresponding color coordinate points. FIG. 11 shows the difference between a 7-color gamut range and a 3-color gamut range, it can be observed that the difference indicates that some color coordinates can be achieved by a 7-color light source but cannot be achieved by a 3-color light source. It can be seen that FIG. 11 shows that as the color gamut range narrows (for example, changing from a 7-color gamut to a 6-color, 5-color, 4-color, or 3-color gamut), the number of colors that a light source can display decreases accordingly.

In these embodiments, the method can efficiently and accurately perform identification of a lighting color at the saturation level, provide a reliable basis for scenarios such as lighting color design and quality inspection, ensure that lighting colors meet expected standards in terms of saturation performance, and greatly improve the professionalism and accuracy of color management.

To more effectively code a lighting color, in some embodiments, the generating a color code based on the principal hue, the subdivided hue, and the saturation level includes:
generating the color code of the lighting color based on a letter identifier of the principal hue, a numerical identifier of the subdivided hue, and a numerical identifier of the saturation level.

In some embodiments, the letter identifier of the principal hue can be R for red, Y for yellow, and the like.

In some embodiments, the numerical identifier of the subdivided hue can be 25, 50, 75, and the like.

In some embodiments, the numerical identifier of the saturation level can be 02, 04, 06, 08, and the like.

For example, the color code can be B50 10, P50 10, and the like.

In these embodiments, generating a lighting color code based on identifiers of a principal hue, a subdivided hue, and a saturation level can precisely and digitally describe a color, which is concise and efficient, provides complete information, facilitates unified management and communication across various industry sectors, reduces errors, and improves color matching and application efficiency.

### Embodiment 3

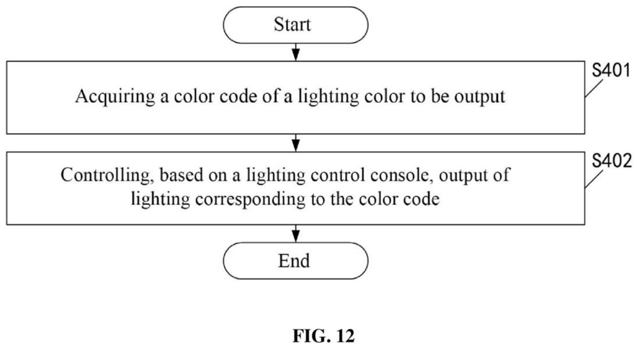

As shown in FIG. 12, some embodiment of the present invention provides a method for controlling lighting output, where the method for controlling lighting output includes:
S401. acquiring a color code of a lighting color to be output, wherein the color code is obtained by coding according to the method for coding a lighting color based on a digital lighting color library according to any one of Embodiment 2; and
S402. controlling output of lighting corresponding to the color code based on a lighting control console.

In some embodiments, the lighting control console is a professional device used to centrally control and manage various lighting systems, including stage lighting, architectural lighting, and landscape lighting, and plays a key role in a plurality of fields such as performing arts, film and television, architecture, and exhibitions.

In these embodiments, the method achieves seamless transition of a lighting color from digital coding to actual output. This approach not only improves the accuracy and consistency of lighting color output, ensuring a high degree of uniformity of lighting colors across different devices and scenarios, but also greatly enhances lighting control efficiency, allowing operators to quickly invoke color codes from a digital lighting color library to complete lighting setup, thereby providing an efficient, reliable, and standardized solution for various lighting application scenarios.

To accurately and effectively control output of a lighting, in some embodiments, the controlling output of lighting corresponding to the color code based on a lighting control console includes:
identifying a corresponding subdivided hue and a corresponding saturation level in the color code;
determining a first control amount of a first channel in the lighting control console based on the subdivided hue, and determining a second control amount of a second channel in the lighting control console based on the saturation level; and
controlling, based on the first control amount and the second control amount, the lighting control console to output the lighting corresponding to the color code.

In some embodiments, the lighting control console determines control amounts of two different channels (a first channel and a second channel) based on an identified subdivided hue and saturation level, respectively, and subsequently outputs a lighting corresponding to the color code.

In some embodiments, the first channel refers to a control channel in the lighting control console, and the control amount of the first channel is determined based on the subdivided hue in the color code. By adjusting the control amount of the first channel, a hue of the lighting output can be changed to match color characteristics corresponding to the subdivided hue.

In some embodiments, the second channel refers to another control channel in the lighting control console, and the control amount of the second channel is determined based on the saturation level in the color code. By adjusting the control amount of the second channel, the vividness of the lighting output can be changed to achieve a color effect corresponding to the saturation level.

In some embodiments, the first control amount is determined based on a subdivided hue in a color code, and is used to control output parameters of a first channel in a lighting control console, thereby adjusting a hue of the lighting output. Different subdivided hues correspond to different first control amounts to achieve lighting outputs of various hues.

In some embodiments, a second control amount is determined based on a saturation level in a color code, and is used to control output parameters of a second channel in the lighting control console, thereby changing the vividness of the lighting output. Different saturation levels correspond to different second control amounts, enabling the lighting to present effects ranging from dull to vivid.

For example, the following shows a correspondence between the first control amount, the second control amount, and faders of the lighting control console.

| First channel: subdivided hue (starting from R) | | | | | Second channel: saturation | |
|---|---|---|---|---|---|---|
| First control amount | Subdivided hue range | First control amount | Subdivided hue range | | Second control amount | Saturation |
| 1-6 | 25 | 121-126 | 25 | | 1-12 | 2 |
| 7-12 | 50 | 127-132 | 50 | | 13-24 | 4 |
| 13-18 | 75 | 133-138 | 75 | | 25-36 | 6 |
| 19-24 | 100 | 139-144 | 100 | | 37-48 | 8 |
| 25-30 | 25 | 145-150 | 25 | | 49-60 | 10 |
| 31-36 | 50 | 151-156 | 50 | | 61-72 | 12 |
| 37-42 | 75 | 157-162 | 75 | | 73-84 | 14 |
| 43-48 | 100 | 163-168 | 100 | | 85-96 | 16 |
| 49-54 | 25 | 170-175 | 25 | | 97-108 | 18 |
| 55-60 | 50 | 176-181 | 50 | | 109-120 | 20 |
| 61-66 | 75 | 182-187 | 75 | | 121-132 | 22 |
| 67-72 | 100 | 188-193 | 100 | | 133-144 | 24 |
| 73-78 | 25 | 194-199 | 25 | | 145-156 | 26 |
| 79-84 | 50 | 200-205 | 50 | | 157-168 | 28 |
| 85-90 | 75 | 206-211 | 75 | | 169-180 | 30 |
| 91-96 | 100 | 212-217 | 100 | | 181-192 | 32 |
| 97-102 | 25 | 218-223 | 25 | | 193-204 | 34 |
| 103-108 | 50 | 224-229 | 50 | | 205-216 | 36 |
| 109-114 | 75 | 230-235 | 75 | | 217-228 | 38 |
| 115-120 | 100 | 236-255 | 100 | | 229-255 | 40 |

| | | | | | | |
|---|---|---|---|---|---|---|
| Note: the coordinate points of saturation for each color vary, with a minimum of 6 coordinate points and a maximum of 18 coordinate points. | | | | | | |

In these embodiments, the method can achieve precise matching and flexible control of a lighting color from coding to actual output, thereby effectively improving the accuracy of lighting color reproduction and the convenience of control, thereby meeting the requirements of diverse lighting scenarios for highly customized and precise output of color.

To facilitate manual control by an operator, in some embodiments, the controlling, based on the first control amount and the second control amount, the lighting control console to output the lighting corresponding to the color code includes:

displaying the first control amount and the second control amount on a target display; and

detecting operations performed by an operator on the lighting control console based on the first control amount and the second control amount, so that the lighting control console outputs the lighting corresponding to the color code.

In some embodiments, when controlling the lighting control console, an operator can adjust faders on the lighting control console based on a first control amount and a second control amount to complete control of the lighting output.

In these embodiments, the method can improve visualization and interactivity of lighting control, thereby not only facilitating real-time monitoring and adjustment of lighting parameters by the operator to ensure that lighting output accurately conforms to the requirements of a color code, but also reducing operational difficulty and error rates, improving the efficiency and quality of lighting control work.

### Embodiment 4

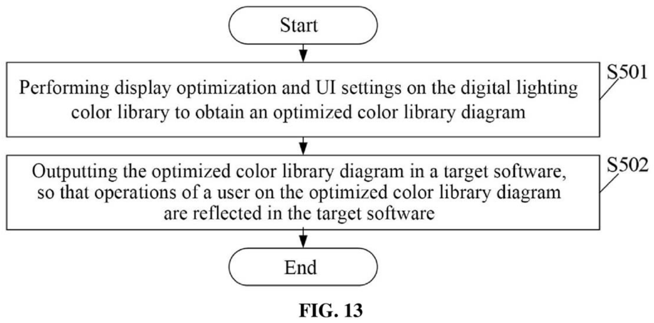

As shown in FIG. 13, some embodiments of the present invention provide a method for applying a digital lighting color library, where the method for applying the digital lighting color library includes:
S501. performing display optimization and UI settings on the digital lighting color library to obtain an optimized color library diagram; and
S502. outputting the optimized color library diagram in a target software, so that operations of a user on the optimized color library diagram are reflected in the target software.

In some embodiments, display optimization refers to improvements and adjustments to the display aspects of the digital lighting color library, with the aim of presenting the color information in the color library to the user in a clearer and more accurate manner. For example, the display accuracy of colors is optimized to avoid color deviations during the display process; and the arrangement of colors is adjusted to better align with the user's visual preferences, making it easier for the user to find and compare different colors.

In some embodiments, the UI is User Interface, and the UI settings refer to the process of designing and configuring the user interface of the digital lighting color library. This includes determining the layout of the interface, the positions and styles of elements (such as buttons, menus, icons, etc.), interaction methods, and the like. Well UI settings can improve the convenience and comfort of user operations, enabling users to interact with the color library more easily.

In some embodiments, the optimized color library diagram refers to the graphical representation result obtained after displaying optimizations and UI settings have been applied to the digital lighting color library. The optimized color library diagram presents the color information in the color library in an intuitive graphical interface, allowing users to quickly browse, select, and manipulate the colors in the color library through this graphical interface. The optimized color library diagram typically retains the core data information of the color library while improving the user experience through optimized display and UI design.

In some embodiments, the target software refers to a specific application program that a user needs to use the digital lighting color library. This software can be a lighting design software or stage control software, etc., where the user needs to select and apply the appropriate lighting color by means of the digital lighting color library. Outputting the optimized color library diagram to the target software is intended to integrate the color library with the functionalities of the target software, facilitating the user to directly use the colors from the library within the workflow of the target software.

In some embodiments, the operation of the optimized color library diagram by the user refers to the various operations performed by the user on the optimized color library diagram within the target software.

In these embodiments, the method enables users to more conveniently and intuitively browse, select, and apply lighting colors within the target software environment. Simultaneously, it enhances the integration of the digital lighting color library with the target software, expands the application scenarios and functional implementation methods of the color library, and improves the efficiency and quality of lighting design, control, and other related tasks.

To better achieve matching optimization, in some embodiments, the performing display optimization and UI settings on the digital lighting color library to obtain an optimized color library diagram includes:

adjusting color boundary clarity in the digital lighting color library, adding annotations to coded letters and numbers, optimizing a human-machine interaction interface, and setting operation logic.

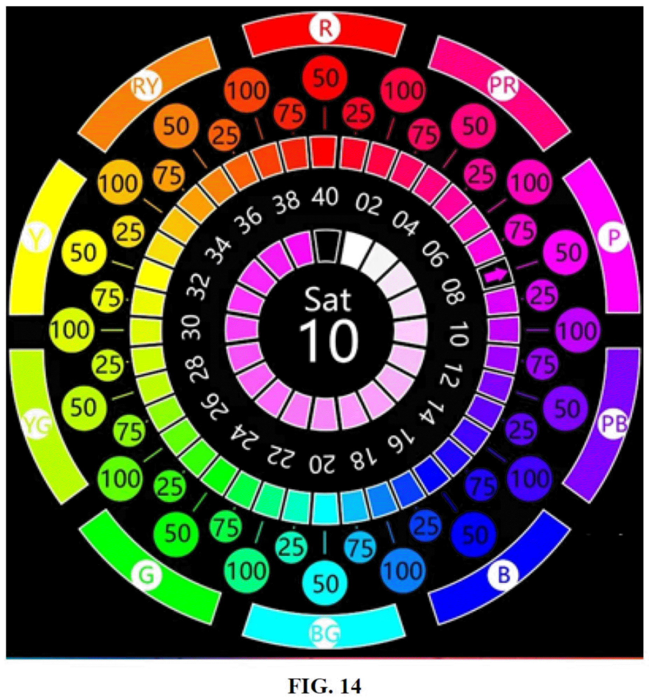

For example, FIG. 14 shows an example of an optimized color library diagram.

In these embodiments, the method enables more precise and unambiguous presentation of lighting colors in the color library through the adjustments to the clarity of color boundaries, facilitates the user's rapid understanding of the meaning of the lighting color coding through the addition of coded letter and number annotations, enhances the convenience of operations and visual comfort through the optimization of the human-machine interface, and ensures that the user's operations align with common habits through the setting of the operation logic, thereby reducing the learning cost. In summary, the method improves the overall usability, ease of use, and professionalism of the digital lighting color library, and assists users in efficiently completing lighting-related tasks.

### Embodiment 5

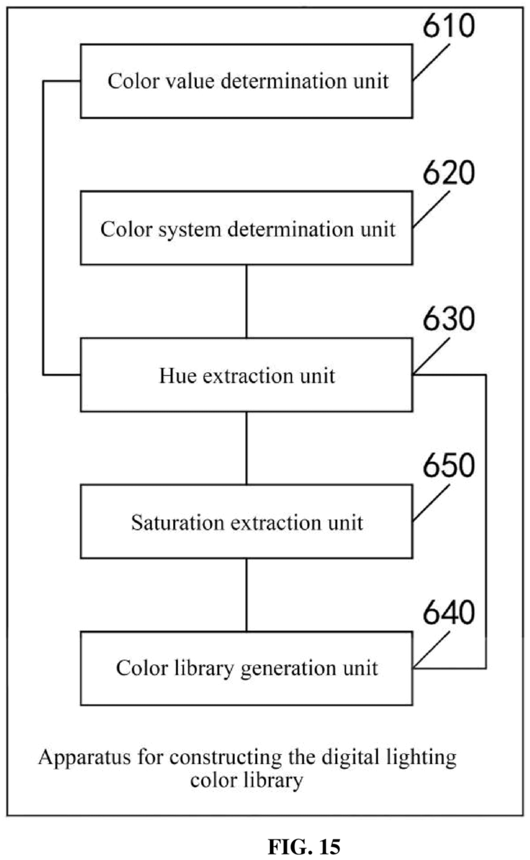

FIG. 15 shows a schematic structural diagram of an apparatus for constructing a digital lighting color library. It should be understood that the apparatus corresponds to the method performed in FIG. 1 and can perform the steps involved in the aforementioned method. The specific functions and effects of the apparatus can be referenced in the descriptions above. To avoid repetition, a detailed description is appropriately omitted here.

The apparatus for constructing the digital lighting color library includes:
a color value determination unit 610, configured to determine a target color value corresponding to lighting application scenario requirements;
a color system determination unit 620, configured to determine a target color system adapted to lighting display characteristics;
a hue extraction unit 630, configured to extract a plurality of hues from the target color system based on the target color value; and
a color library generation unit 640, configured to generate the digital lighting color library based on preset color library generation requirements and the plurality of hues.

In some embodiments, the color value determination unit 610 is specifically configured to determine the target color value based on an optimal color discrimination requirement of a human eye included in the lighting application scenario requirements.

In some embodiments, the color value determination unit 610 is specifically configured to determine the target color value based on lighting display effect requirements and the optimal color discrimination requirement of the human eye included in the lighting application scenario requirements.

In some embodiments, the color system determination unit 620 is specifically configured to determine the target color system from a preset color system library based on lighting display color accuracy requirements, color space richness requirements, and human-eye perception effect requirements.

In some embodiments, when the target color system is the Munsell color system and the target color value is the Value 5 in the Munsell color system, the hue extraction unit 630 is specifically configured to extract 40 hues visually equidistant from the Munsell color system based on Value 5.

In some embodiments, the apparatus for constructing the digital lighting color library further includes:
a saturation extraction unit 650, configured to extract respective saturation for each of the 40 hues from the Munsell color system.

In some embodiments, the color library generation unit 640 is specifically configured to generate the digital lighting color library based on the preset color library generation requirements, the 40 hues, and the respective saturation for each of the 40 hues.

In some embodiments, the preset color library generation requirements comprise at least color library structure requirements, hue hierarchy requirements, display layout requirements, and element association requirements.

### Embodiment 6

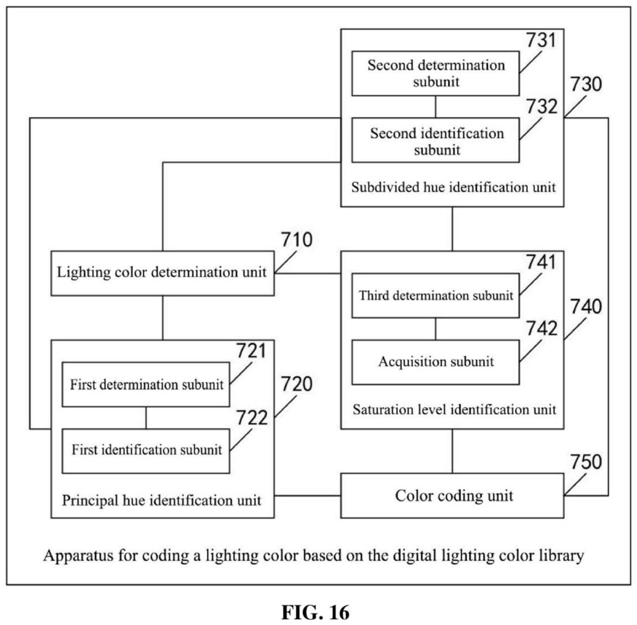

FIG. 16 shows a schematic structural diagram of an apparatus for coding a lighting color based on a digital lighting color library. It should be understood that the apparatus corresponds to the method performed in FIG. 3 and can perform the steps involved in the aforementioned method. The specific functions and effects of the apparatus can be referenced in the descriptions above. To avoid repetition, a detailed description is appropriately omitted here.

The apparatus for coding a lighting color based on the digital lighting color library includes:
a lighting color determination unit 710, configured to determine a lighting color to be coded;
a principal hue identification unit 720, configured to identify, based on the digital lighting color library, a principal hue to which the lighting color belongs;
a subdivided hue identification unit 730, configured to determine a subdivided hue based on the lighting color and the principal hue;
a saturation level identification unit 740, configured to determine a saturation level based on the lighting color and the subdivided hue; and
a color coding unit 750, configured to generate a color code based on the principal hue, the subdivided hue, and the saturation level.

In some embodiments, the lighting color determination unit 710 is specifically configured to detect a lighting color of a target lighting by using a spectral detector; or determine the lighting color of the target lighting based on lighting output requirements.

In some embodiments, the digital lighting color library includes a principal hue circle composed of a plurality of principal hues, a subdivided hue circle composed of a plurality of subdivided hues, and a saturation circle corresponding to each of the plurality of subdivided hue.

In some embodiments, the principal hue identification unit 720 is specifically configured to determine a principal hue most similar to the lighting color in the principal hue circle;

the subdivided hue identification unit 730 is specifically configured to determine, in the subdivided hue circle, a plurality of target subdivided hues under the principal hue, and determining a subdivided hue most similar to the lighting color from the plurality of target subdivided hues; and

the saturation level identification unit 740 is specifically configured to determine a saturation level most similar to the lighting color in the saturation circle corresponding to the subdivided hue.

In some embodiments, the principal hue identification unit 720 includes:
a first determination subunit 721, configured to determine, in a chromaticity diagram, a color coordinate range corresponding to each principal hue in the principal hue circle;
a first determination subunit 721, further configured to determine a lighting color coordinate of the lighting color;
a first identification subunit 722, configured to identify a target color coordinate range to which the lighting color coordinate belongs; and
a first determination subunit 721, further configured to determine a principal hue corresponding to the target color coordinate range as the principal hue to which the lighting color belongs.

In some embodiments, the subdivided hue identification unit 730 includes:
a second determination subunit 731, configured to determine, based on a color coordinate of each target subdivided hue and a preset color tolerance, target color coordinate ranges corresponding to the plurality of target subdivided hues;
a second determination subunit 731, further configured to determine a lighting color coordinate of the lighting color;
a second identification subunit 732, configured to identify a target color coordinate range to which the lighting color coordinate belongs; and
a second determination subunit 731, further configured to determine a target subdivided hue corresponding to the target color coordinate range as a subdivided hue to which the lighting color belongs.

In some embodiments, the saturation level identification unit 740 includes:
a third determination subunit 741, configured to determine, based on the saturation circle corresponding to the subdivided hue, saturation grading points in a chromaticity diagram;
a third determination subunit 741, further configured to determine a lighting color coordinate of the lighting color;
an acquisition subunit 742, configured to acquire a target saturation grading point nearest to the lighting color coordinate; and
a third determination subunit 741, further configured to determine a saturation level corresponding to the target saturation grading point as the saturation level of the lighting color.

In some embodiments, the color coding unit 750 is specifically configured to generate the color code of the lighting color based on a letter identifier of the principal hue, a numerical identifier of the subdivided hue, and a numerical identifier of the saturation level.

### Embodiment 7

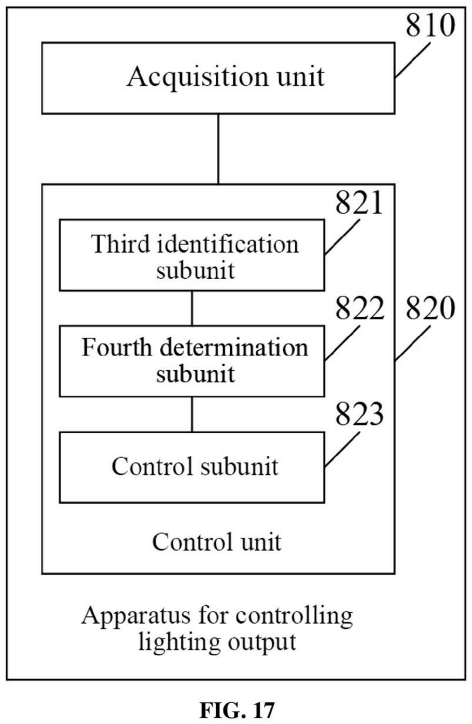

FIG. 17 shows a schematic structural diagram of an apparatus for controlling lighting output. It should be understood that the apparatus corresponds to the method performed in FIG. 12 and can perform the steps involved in the aforementioned method. The specific functions and effects of the apparatus can be referenced in the descriptions above. To avoid repetition, a detailed description is appropriately omitted here.

The apparatus for controlling lighting output includes:
an acquisition unit 810, configured to acquire a color code of a lighting color to be output, wherein the color code is obtained by coding according to the method for coding a lighting color based on a digital lighting color library according to any one of the second aspect of the present invention; and
a control unit 820, configured to control output of lighting corresponding to the color code based on a lighting control console.

In some embodiments, the control unit 820 includes:
a third identification subunit 821, configured to identify a corresponding subdivided hue and a corresponding saturation level in the color code;
a fourth determination subunit 822, configured to determine a first control amount of a first channel in the lighting control console based on the subdivided hue, and determine a second control amount of a second channel in the lighting control console based on the saturation level; and
a control subunit 823, configured to control, based on the first control amount and the second control amount, the lighting control console to output the lighting corresponding to the color code.

In some embodiments, the control subunit 823 is specifically configured to display the first control amount and the second control amount on a target display; and
the control subunit 823 is further specifically configured to detect operations performed by an operator on the lighting control console based on the first control amount and the second control amount, so that the lighting control console outputs the lighting corresponding to the color code.

### Embodiment 8

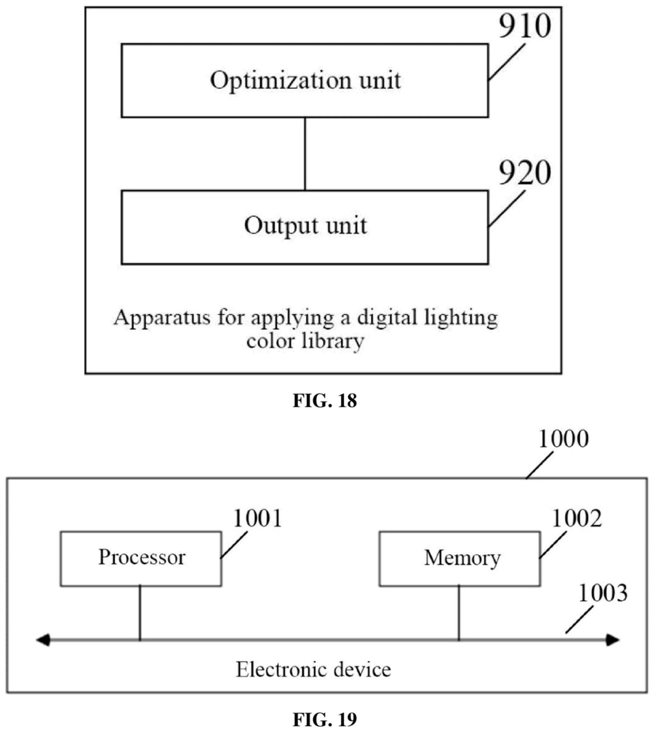

FIG. 18 shows a schematic structural diagram of an apparatus for applying a digital lighting color library. It should be understood that the apparatus corresponds to the method performed in FIG. 13 and can perform the steps involved in the aforementioned method. The specific functions and effects of the apparatus can be referenced in the descriptions above. To avoid repetition, a detailed description is appropriately omitted here.

The apparatus for applying the digital lighting color library includes:
an optimization unit 910, configured to perform display optimization and UI settings on the digital lighting color library to obtain an optimized color library diagram; and
an output unit 920, configured to output the optimized color library diagram in a target software, so that operations of a user on the optimized color library diagram are reflected in the target software.

In some embodiments, the optimization unit 910 is specifically configured to adjust color boundary clarity in the digital lighting color library, add annotations to coded letters and numbers, optimize a human-machine interaction interface, and set operation logic.

### Embodiment 9

As shown in FIG. 19, the present invention provides an electronic device 1000. The electronic device 1000 includes a processor 1001 and a memory 1002, where the processor 1001 and the memory 1002 are interconnected and communicate with each other via a communication bus 1003 and/or other forms of connection mechanisms (not shown), the memory 1002 stores a computer program executable by the processor 1001, and when a computing device operates, the processor 1001 executes the computer program to perform the method according to any of the foregoing optional embodiments.

The present invention provides a computer-readable storage medium, where the computer-readable storage medium stores a computer program, and the computer program, when executed by a processor, performs the method according to any of the foregoing optional embodiments.

The computer-readable storage medium can be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disks, or an optical disks.

The present invention provides a computer program product, where the computer program product includes a computer program, and the computer program, when executed by a processor, performs the method according to any of the foregoing optional embodiments.

Finally, it should be noted that the foregoing embodiments are merely intended for describing the technical solutions of the present invention other than limiting the present invention. Although the present invention is described in detail with reference to the foregoing embodiments, those of ordinary skill in the art should understand that modifications can still be made to the technical solutions described in the foregoing embodiments or equivalent replacements can still be made to some or all technical features thereof. These modifications or replacements do not depart from the essence of the corresponding technical solutions within the scope of the technical solutions of the embodiments of the present invention. These modifications or replacements should all be considered within the scope of the claims and the description of the present invention. In particular, the technical features mentioned in the embodiments can be combined in any way as long as there is no conflict. The present invention is not limited to the specific embodiments disclosed herein but includes all technical solutions falling within the scope of the claims.

## Claims

1. A method for constructing a digital lighting color library, **characterized in that** the method comprises:
determining a target color value based on lighting display effect requirements and an optimal color discrimination requirement of a human eye included in lighting application scenario requirements;
determining Munsell color system from a preset color system library based on lighting display color accuracy requirements, color space richness requirements, and human-eye perception effect requirements;
when the target color value is Value 5 in the Munsell color system, extracting 40 hues visually equidistant from the Munsell color system based on Value 5, wherein the visually equidistant refers to a condition in which differences between the extracted hues are equal in human visual perception;
extracting respective saturation of each of the 40 hues from the Munsell color system, wherein the respective saturation of each of the 40 hues refers to a plurality of saturations corresponding to each hue in the 40 hues; and
generating the digital lighting color library based on color library structure requirements, hue hierarchy requirements, display layout requirements, element association requirements, the 40 hues, and the respective saturation for each of the 40 hues;
wherein the color library structure requirements refer to a need for explicit specification of an overall architecture of the color library during the generation of the digital lighting color library, comprising hierarchical division of hues, saturations, and color value; the hue hierarchy requirements refer to a requirement that division of hues in the color library satisfies a hierarchy, that is, a classification of hues from a macro level to a micro level and from broad categories to specific categories; the display layout requirements refer to a standardization of how color information is presented in a display or interactive interface of the color library, comprising an arrangement of color samples, labeling positions of color names or numbers, and a display format of color parameters; and the element association requirements refer to a specification of how color elements are associated with saturations, color names, color codes within the color library.

2. A method for coding a lighting color based on a digital lighting color library, wherein the digital lighting color library is constructed by the method for constructing a digital lighting color library according to claim 1, and the method for coding lighting colors comprises:
determining a lighting color to be coded;
identifying, based on the digital lighting color library, a principal hue to which the lighting color belongs;
determining a subdivided hue based on the lighting color and the principal hue;
determining a saturation level based on the lighting color and the subdivided hue; and
generating a color code based on the principal hue, the subdivided hue, and the saturation level.

3. The method for coding a lighting color based on a digital lighting color library according to claim 2, wherein the determining a lighting color to be coded comprises:
detecting a lighting color of a target lighting by using a spectral detector; or
determining the lighting color of the target lighting based on lighting output requirements.

4. The method for coding a lighting color based on a digital lighting color library according to claim 2, wherein the digital lighting color library comprises a principal hue circle composed of a plurality of principal hues, a subdivided hue circle composed of a plurality of subdivided hues, and a saturation circle corresponding to each of the plurality of subdivided hue.

5. The method for coding a lighting color based on a digital lighting color library according to claim 4, wherein the identifying, based on the digital lighting color library, a principal hue to which the lighting color belongs comprises:
determining a principal hue most similar to the lighting color in the principal hue circle;
the determining a subdivided hue based on the lighting color and the principal hue comprises:
determining, in the subdivided hue circle, a plurality of target subdivided hues under the principal hue, and determining a subdivided hue most similar to the lighting color from the plurality of target subdivided hues; and
the determining a saturation level based on the lighting color and the subdivided hue comprises:
determining a saturation level most similar to the lighting color in the saturation circle corresponding to the subdivided hue.

6. The method for coding a lighting color based on a digital lighting color library according to claim 5, wherein the determining a principal hue most similar to the lighting color in the principal hue circle comprises:
determining, in a chromaticity diagram, a color coordinate range corresponding to each principal hue in the principal hue circle;
determining a lighting color coordinate of the lighting color;
identifying a target color coordinate range to which the lighting color coordinate belongs;
and
determining a principal hue corresponding to the target color coordinate range as the principal hue to which the lighting color belongs.

7. The method for coding a lighting color based on a digital lighting color library according to claim 5, wherein the determining a subdivided hue most similar to the lighting color from the plurality of target subdivided hues comprises:
determining, based on a color coordinate of each target subdivided hue and a preset color tolerance, target color coordinate ranges corresponding to the plurality of target subdivided hues;
determining a lighting color coordinate of the lighting color;
identifying a target color coordinate range to which the lighting color coordinate belongs;
and
determining a target subdivided hue corresponding to the target color coordinate range as a subdivided hue to which the lighting color belongs.

8. The method for coding a lighting color based on a digital lighting color library according to claim 5, wherein the determining a saturation level most similar to the lighting color in the saturation circle corresponding to the subdivided hue comprises:
determining, based on the saturation circle corresponding to the subdivided hue, saturation grading points in a chromaticity diagram;
determining a lighting color coordinate of the lighting color;
acquiring a target saturation grading point nearest to the lighting color coordinate; and
determining a saturation level corresponding to the target saturation grading point as the saturation level of the lighting color.

9. The method for coding a lighting color based on a digital lighting color library according to claim 2, wherein the generating a color code based on the principal hue, the subdivided hue, and the saturation level comprises:
generating the color code of the lighting color based on a letter identifier of the principal hue, a numerical identifier of the subdivided hue, and a numerical identifier of the saturation level.

10. A method for controlling lighting output, **characterized in that** the method comprises:
acquiring a color code of a lighting color to be output, wherein the color code is obtained by coding according to the method for coding a lighting color based on a digital lighting color library according to any one of claims 2 to 9; and
controlling output of lighting corresponding to the color code based on a lighting control console.

11. The method for controlling lighting output according to claim 10, wherein the controlling output of lighting corresponding to the color code based on a lighting control console comprises:
identifying a corresponding subdivided hue and a corresponding saturation level in the color code;
determining a first control amount of a first channel in the lighting control console based on the subdivided hue, and determining a second control amount of a second channel in the lighting control console based on the saturation level; and
controlling, based on the first control amount and the second control amount, the lighting control console to output the lighting corresponding to the color code.

12. The method for controlling lighting output according to claim 11, wherein the controlling, based on the first control amount and the second control amount, the lighting control console to output the lighting corresponding to the color code comprises:
displaying the first control amount and the second control amount on a target display; and
detecting operations performed by an operator on the lighting control console based on the first control amount and the second control amount, so that the lighting control console outputs the lighting corresponding to the color code.

13. A method for applying a digital lighting color library, **characterized in that** the digital lighting color library is constructed by the method for constructing a digital lighting color library according to claim 1, and the method comprises:
performing display optimization and UI settings on the digital lighting color library to obtain an optimized color library diagram; and
outputting the optimized color library diagram in a target software, so that operations of a user on the optimized color library diagram are reflected in the target software.

14. The method for applying the digital lighting color library according to claim 13, wherein the performing display optimization and UI settings on the digital lighting color library to obtain an optimized color library diagram comprises:
adjusting color boundary clarity in the digital lighting color library, adding annotations to coded letters and numbers, optimizing a human-machine interaction interface, and setting operation logic.

15. An apparatus for constructing a digital lighting color library, **characterized in that** the apparatus for constructing a digital lighting color library comprises:
a color value determination unit, configured to determine a target color value corresponding to lighting application scenario requirements;
a color system determination unit, configured to determine a target color system adapted to lighting display characteristics;
a hue extraction unit, configured to extract a plurality of hues from the target color system based on the target color value;
a color library generation unit, configured to generate the digital lighting color library based on preset color library generation requirements and the plurality of hues;
wherein the color value determination unit is specifically configured to determine the target color value based on lighting display effect requirements and an optimal color discrimination requirement of a human eye included in the lighting application scenario requirements;
wherein the color system determination unit is specifically configured to determine Munsell color system from a preset color system library based on lighting display color accuracy requirements, color space richness requirements, and human-eye perception effect requirements;
wherein when the target color value is Value 5 in the Munsell color system, the hue extraction unit is specifically configured to extract extracting 40 hues visually equidistant from the Munsell color system based on Value 5, wherein the visually equidistant refers to a condition in which differences between the extracted hues are equal in human visual perception;
a saturation extraction unit, configured to extract respective saturation of each of the 40 hues from the Munsell color system, wherein the respective saturation of each of the 40 hues refers to a plurality of saturations corresponding to each hue in the 40 hues;
wherein the color library generation unit is specifically configured to generate the digital lighting color library based on the preset color library generation requirements, the 40 hues, and the respective saturation for each of the 40 hues, the preset color library generation requirements comprise at least color library structure requirements, hue hierarchy requirements, display layout requirements, and element association requirements;
wherein the color library structure requirements refer to a need for explicit specification of an overall architecture of the color library during the generation of the digital lighting color library, comprising hierarchical division of hues, saturations, and color values; the hue hierarchy requirements refer to a requirement that division of hues in the color library satisfies a hierarchy, that is, a classification of hues from a macro level to a micro level and from broad categories to specific categories; the display layout requirements refer to a standardization of how color information is presented in a display or interactive interface of the color library, comprising an arrangement of color samples, labeling positions of color names or numbers, and a display format of color parameters; and the element association requirements refer to a specification of how color elements are associated with saturations, color names, color codes within the color library.
